(19) Europäisches Patentamt European Patent Office Office européen des brevets

(11) **EP 4 471 449 A1**

(12) **EUROPEAN PATENT APPLICATION**
published in accordance with Art. 153(4) EPC

(43) Date of publication:
04.12.2024 Bulletin 2024/49

(21) Application number: 23759149.0

(22) Date of filing: 21.02.2023

(51) International Patent Classification (IPC):
*G01S 5/02* (2010.01)

(52) Cooperative Patent Classification (CPC):
G01S 5/02; G01S 5/20

(86) International application number:
PCT/CN2023/077349

(87) International publication number:
WO 2023/160524 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2022 CN 202210196160
20.12.2022 PCT/CN2022/140420

(71) Applicant: Huawei Technologies Co., Ltd.
Shenzhen, Guangdong 518129 (CN)

(72) Inventors:
• PENG, Lan
Shenzhen, Guangdong 518129 (CN)
• DU, Zhenguo
Shenzhen, Guangdong 518129 (CN)
• WANG, Qi
Shenzhen, Guangdong 518129 (CN)
• WEI, Peizheng
Shenzhen, Guangdong 518129 (CN)
• QU, Pengcheng
Shenzhen, Guangdong 518129 (CN)

(74) Representative: Pfenning, Meinig & Partner mbB
Patent- und Rechtsanwälte
Theresienhöhe 11a
80339 München (DE)

(54) **DISTANCE MEASUREMENT METHOD, APPARATUS, SYSTEM, AND READABLE STORAGE MEDIUM**

(57) A distance measurement method, apparatus, and system, and a readable storage medium are provided. The distance measurement method includes: obtaining first offset time (S310) and a first moment (S330), where the first offset time is a time difference between a system clock of a first device and a system clock of a second device, and the first moment is a moment at which the second device sends a distance measurement signal; obtaining a second moment at which the distance measurement signal is received (S360), where the second moment is obtained based on a third moment at which the first device starts to receive the distance measurement signal and a receiving time interval, and the third moment is obtained through conversion based on a fourth moment at which a distance measurement signal receiving chip starts to receive the distance measurement signal, the system clock of the first device, and a chip clock of the distance measurement signal receiving chip; and obtaining a distance between the first device and the second device based on the first offset time, the first moment, and the second moment (S370). Because precision of the system clock is high, a distance obtained through calculation based on a moment obtained by using the system clock is also more precise, and an error is smaller.

EP 4 471 449 A1

First device

Second device

Synchronize system clocks,
to obtain first offset time  ⌒ S310

Obtain a first moment
at which a distance
measurement signal is
sent  ⌒ S320

Obtain the first
moment  ⌒ S330

Start to receive the
distance
measurement signal,
and obtain a fourth
moment  ⌒ S340

Send the distance
measurement signal
at the first moment  ⌒ S350

Obtain a second
moment at which the
distance
measurement signal
is received  ⌒ S360

Obtain a distance between the
first device and the second
device based on the first offset
time, the first moment, and the
second moment  ⌒ S370

FIG. 4

**Description**

This application claims priorities to International Patent Application No. PCT/CN2022/140420 filed on December 20, 2022 and to Chinese Patent Application No. 202210196160.2 filed on February 28, 2022, both of which are incorporated herein by reference in their entireties.

**TECHNICAL FIELD**

This application relates to the terminal field, and in particular, to a distance measurement method, apparatus, and system, and a readable storage medium.

**BACKGROUND**

One-way distance measurement is a widely used technology. In the one-way distance measurement, a distance between a master device and a slave device may be obtained via the master device. For example, a distance between a mobile phone and a paired Bluetooth headset is obtained via the mobile phone.

Currently, in the one-way distance measurement solution, the master device mainly reads signal strength of a connection to the slave device, and obtains the distance between the master device and the slave device through reverse inference based on the signal strength.

However, a distance obtained through calculation in the existing one-way distance measurement solution is not precise enough, and an error is large.

**SUMMARY**

Embodiments of this application provide a distance measurement method, apparatus, and system, and a readable storage medium, to resolve problems that a distance obtained through calculation in an existing one-way distance measurement solution is not precise enough and an error is large.

According to a first aspect, an embodiment of this application provides a distance measurement method, applied to a first device, and including:

obtaining first offset time and a first moment, where the first offset time is a time difference between a system clock of the first device and a system clock of a second device, the first moment is a moment at which the second device sends a distance measurement signal, and the first moment is obtained based on the system clock of the second device; obtaining a second moment at which the distance measurement signal is received, where the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received; and obtaining a distance between the first device and the second device based on the first offset time, the first moment, and the second moment.

In a possible implementation of the first aspect, the first device may be a mobile phone, a tablet computer, an augmented reality (augmented reality, AR)/virtual reality (virtual reality, VR) device, a large-screen device, a notebook computer, a netbook, a personal digital assistant (personal digital assistant, PDA), or the like. The first device needs to have a capability of receiving the distance measurement signal. A specific type of the first device is not limited in this embodiment of this application. The second device may be a terminal device having a distance measurement signal transmitting function, a first device having the distance measurement signal transmitting function, or the like. For example, the terminal device having the distance measurement signal transmitting function may be an electronic label, a smart key chain including the electronic label, or a Bluetooth headset.

In the first aspect, the first device obtains the first offset time with the system clock of the second device, and synchronizes system time of the first device with system time of the second device. Then, the second moment at which the distance measurement signal sent by the second device is received and the first moment at which the second device sends the distance measurement signal are obtained. Finally, the distance between the first device and the second device may be obtained through calculation based on the first offset time, the first moment, and the second moment. Because precision of the system clock is high, a distance obtained through calculation based on a moment obtained by using the system clock is also more precise, and an error is smaller.

In some implementations, the obtaining a second moment at which the distance measurement signal is received includes: The distance measurement signal receiving chip obtains the fourth moment and sends the fourth moment to a driver of the distance measurement signal receiving chip. The driver of the distance measurement signal receiving chip corrects the fourth moment to the third moment that is based on the system clock. The driver of the distance measurement signal receiving chip sends the third moment to an application layer, and adds, at the application layer, the receiving time interval to the third moment to obtain the second moment.

In some implementations, that the driver of the distance measurement signal receiving chip corrects the fourth moment to the third moment that is based on the system clock includes: When receiving the fourth moment, the driver of the distance measurement signal receiving chip corrects the fourth moment to the third moment that is based on the system clock; or the driver of the distance measurement signal receiving chip corrects, in response to a parameter obtaining instruction from the application layer, the fourth moment to the third moment that is based on the system clock.

In some implementations, the obtaining a second moment at which the distance measurement signal is received includes: The distance measurement signal receiving chip obtains the fourth moment. In response to a parameter obtaining instruction, a driver of the distance measurement signal receiving chip obtains the fourth moment from the distance measurement signal receiving chip, and corrects the fourth moment to the third moment that is based on the system clock. The driver of the distance measurement signal receiving chip sends the third moment to an application layer, and adds, at the application layer, the interval time to the third moment to obtain the second moment.

In some implementations, correcting the fourth moment to the third moment that is based on the system clock includes: simultaneously obtaining, by using the driver of the distance measurement signal receiving chip, a fifth moment that is based on the system clock and a sixth moment that is based on the chip clock, where a time difference between the fourth moment and the sixth moment is second offset time; and obtaining the third moment based on the fifth moment and the second offset time.

In some implementations, the obtaining a distance between the first device and the second device based on the first offset time, the first moment, and the second moment includes: obtaining time of flight of the distance measurement signal based on the first offset time, the first moment, and the second moment; and obtaining the distance between the first device and the second device based on a propagation speed of the distance measurement signal in a medium and the time of flight.

In some implementations, the obtaining time of flight of the distance measurement signal based on the first offset time, the first moment, and the second moment includes: correcting, based on the first offset time, the first moment to a seventh moment that is based on the system clock of the first device; and subtracting the seventh moment from the second moment, to obtain the time of flight of the distance measurement signal; or correcting, based on the first offset time, the second moment to an eighth moment that is based on the system clock of the second device; and subtracting the first moment from the eighth moment, to obtain the time of flight of the distance measurement signal.

In some implementations, the obtaining first offset time includes: The first device sequentially sends at least one synchronization instruction to the second device, and records, based on the system clock of the first device, a ninth moment at which each synchronization instruction is sent; receives a synchronization feedback identifier from the second device, and records, based on the system clock of the first device, a tenth moment at which each synchronization feedback identifier is received, where the synchronization feedback identifier includes an eleventh moment at which the second device receives the synchronization instruction and a twelfth moment at which the second device sends the synchronization feedback identifier, and the eleventh moment and the twelfth moment are obtained based on the system clock of the second device; and obtains the first offset time based on the ninth moment, the tenth moment, the eleventh moment, and the twelfth moment.

In some implementations, the obtaining a first moment includes: sending a first moment query instruction to the second device; and receiving at least one first moment sent by the second device.

In some implementations, the obtaining a first moment includes: sending the first moment query instruction to the second device; receiving device identification information sent by the second device; and obtaining the at least one preset first moment based on the device identification information.

According to a second aspect, an embodiment of this application provides a distance measurement method, applied to a second device, and including: obtaining a first moment at which a distance measurement signal is sent; sending the first moment to a first device; and sending the distance measurement signal at the first moment based on a system clock of the second device.

In some implementations, before the distance measurement signal is sent at the first moment based on the system clock of the second device, the method further includes: receiving at least one synchronization instruction from the first device, and recording, based on the system clock of the second device, an eleventh moment at which each synchronization instruction is received; and sending a synchronization feedback identifier to the first device in response to each synchronization instruction, where the synchronization feedback identifier includes the eleventh moment and a twelfth moment at which the synchronization feedback identifier is sent, and the twelfth moment is recorded based on the system clock of the second device.

In some implementations, the obtaining a first moment at which a distance measurement signal is sent includes: determining that synchronization with the first device is completed; and using, as the first moment, a moment at which preset duration elapses after it is determined that the synchronization is completed.

In some implementations, the obtaining a first moment at which a distance measurement signal is sent includes: receiving a distance measurement signal sending instruction, and obtaining at least one first moment included in the distance measurement signal sending instruction; or obtaining at least one preset first moment based on device identification information of the second device.

In some implementations, the sending the first moment to a first device includes: sending the first moment to the first device after the first moment is obtained; or sending the at least one first moment to the first device in response to a first moment query instruction from the first device.

In some implementations, the sending the first moment to a first device further includes: sending the device identification information of the second device to the first device in response to the first moment query instruction from the first device.

According to a third aspect, an embodiment of this application provides a distance measurement method, applied to a first device, and including:

> obtaining first offset time and a first moment, where the first offset time is a time difference between a system clock of the first device and a system clock of a second device, the first moment is a moment at which the second device sends a distance measurement signal, and the first moment is obtained based on the system clock of the second device; obtaining a second moment at which the distance measurement signal is received, where the second moment is obtained based on a third moment at which the first device starts to receive the distance measurement signal and a receiving time interval, the third moment is a moment at which a hardware virtual layer of the first device starts to receive the distance measurement signal fed back by a distance measurement signal receiving chip of the first device, and the receiving time interval is a time interval between a moment at which the distance measurement signal starts to be received and a moment at which the distance measurement signal is received; and obtaining a distance between the first device and the second device based on the first offset time, the first moment, and the second moment.

In some implementations, the obtaining a second moment at which the distance measurement signal is received includes: obtaining the third moment by using the hardware virtual layer; and reading the third moment from the hardware virtual layer by using an application layer of the first device, and adding, at the application layer, the receiving time interval to the third moment to obtain the second moment.

In some implementations, the obtaining a distance between the first device and the second device based on the first offset time, the first moment, and the second moment includes: obtaining time of flight of the distance measurement signal based on the first offset time, the first moment, and the second moment; and obtaining the distance between the first device and the second device based on a propagation speed of the distance measurement signal in a medium and the time of flight.

In some implementations, the obtaining time of flight of the distance measurement signal based on the first offset time, the first moment, and the second moment includes: correcting, based on the first offset time, the first moment to a seventh moment that is based on the system clock of the first device; and subtracting the seventh moment from the second moment, to obtain the time of flight of the distance measurement signal; or correcting, based on the first offset time, the second moment to an eighth moment that is based on the system clock of the second device; and subtracting the first moment from the eighth moment, to obtain the time of flight of the distance measurement signal.

In some implementations, the obtaining first offset time includes: The first device sequentially sends at least one synchronization instruction to the second device, and records, based on the system clock of the first device, a ninth moment at which each synchronization instruction is sent; receives a synchronization feedback identifier from the second device, and records, based on the system clock of the first device, a tenth moment at which each synchronization feedback identifier is received, where the synchronization feedback identifier includes an eleventh moment at which the second device receives the synchronization instruction and a twelfth moment at which the second device sends the synchronization feedback identifier, and the eleventh moment and the twelfth moment are obtained based on the system clock of the second device; and obtains the first offset time based on the ninth moment, the tenth moment, the eleventh moment, and the twelfth moment.

In some implementations, the obtaining a first moment includes: sending a first moment query instruction to the second device; and receiving at least one first moment sent by the second device.

In some implementations, the obtaining a first moment includes: sending a first moment query instruction to the second device; receiving device identification information sent by the second device; and obtaining at least one preset first moment based on the device identification information.

According to a fourth aspect, an embodiment of this application provides a distance measurement system, including a first device and a second device. The first device obtains first offset time and a first moment, where the first offset time is a time difference between a system clock of the first device and a system clock of the second device, the first moment is a moment at which the second device sends a distance measurement signal, and the first moment is obtained based on the system clock of the second device. The second device sends the distance measurement signal at the first moment based on the system clock of the second device. The first device obtains a second moment at which the distance measurement signal is received, where the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received. The first device obtains a distance between the first device and the second device based on the first offset time, the first moment, and the second moment.

According to a fifth aspect, an embodiment of this application provides a distance measurement apparatus, used in a first device, and including:

an obtaining module, configured to obtain first offset time and a first moment, where the first offset time is a time difference between a system clock of the first device and a system clock of a second device, the first moment is a moment at which the second device sends a distance measurement signal, and the first moment is obtained based on the system clock of the second device; and
the obtaining module is further configured to obtain a second moment at which the distance measurement signal is received, where the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received; or configured to obtain a second moment at which the distance measurement signal is received, where the second moment is obtained based on a third moment at which the first device starts to receive the distance measurement signal and a receiving time interval, the third moment is a moment at which a hardware virtual layer of the first device starts to receive the distance measurement signal fed back by a distance measurement signal receiving chip of the first device, and the receiving time interval is a time interval between a moment at which the distance measurement signal starts to be received and a moment at which the distance measurement signal is received; and
a calculation module, configured to obtain a distance between the first device and the second device based on the first offset time, the first moment, and the second moment.

In some implementations, the obtaining module is specifically configured to: obtain the fourth moment by using the distance measurement signal receiving chip, and send the fourth moment to a driver of the distance measurement signal receiving chip; correct, by using the driver of the distance measurement signal receiving chip, the fourth moment to the third moment that is based on the system clock; and send, by using the driver of the distance measurement signal receiving chip, the third moment to an application layer, and add, at the application layer, the receiving time interval to the third moment to obtain the second moment.

In some implementations, the obtaining module is specifically configured to: when receiving the fourth moment, correct, by using the driver of the distance measurement signal receiving chip, the fourth moment to the third moment that is based on the system clock; or correct, by using the driver of the distance measurement signal receiving chip in response to a parameter obtaining instruction from the application layer, the fourth moment to the third moment that is based on the system clock.

In some implementations, the obtaining module is specifically configured to: obtain the fourth moment by using the distance measurement signal receiving chip; in response to a parameter obtaining instruction, obtain, by using a driver of the distance measurement signal receiving chip, the fourth moment from the distance measurement signal receiving chip, and correct the fourth moment to the third moment that is based on the system clock; and send, by using the driver of the distance measurement signal receiving chip, the third moment to an application layer, and add, at the application layer, the interval time to the third moment to obtain the second moment.

In some implementations, the obtaining module is specifically configured to: simultaneously obtain, by using the driver of the distance measurement signal receiving chip, a fifth moment that is based on the system clock and a sixth moment that is based on the chip clock, where a time difference between the fourth moment and the sixth moment is second offset time; and obtain the third moment based on the fifth moment and the second offset time.

In some implementations, the obtaining module is specifically configured to: obtain the third moment by using the hardware virtual layer; and read the third moment from the hardware virtual layer by using the application layer, and add, at the application layer, the receiving time interval to the third moment to obtain the second moment.

In some implementations, the calculation module is specifically configured to: obtain time of flight of the distance measurement signal based on the first offset time, the first moment, and the second moment; and obtain the distance between the first device and the second device based on a propagation speed of the distance measurement signal in a medium and the time of flight.

In some implementations, the calculation module is specifically configured to: correct, based on the first offset time, the first moment to a seventh moment that is based on the system clock of the first device; and subtract the seventh moment from the second moment, to obtain the time of flight of the distance measurement signal; or correct, based on the first offset time, the second moment to an eighth moment that is based on the system clock of the second device; and subtract the first moment from the eighth moment, to obtain the time of flight of the distance measurement signal.

In some implementations, the obtaining module is specifically configured to: sequentially send at least one synchronization instruction to the second device, and record, based on the system clock of the first device, a ninth moment at which each synchronization instruction is sent; receive a synchronization feedback identifier from the second device, and record, based on the system clock of the first device, a tenth moment at which each synchronization feedback identifier is received, where the synchronization feedback identifier includes an eleventh moment at which the second device receives the synchronization instruction and a twelfth moment at which the second device sends the synchronization feedback identifier, and the eleventh moment and the twelfth moment are obtained based on the system clock of the second device; and obtain the first offset time based on the ninth moment, the tenth moment, the eleventh moment, and the twelfth moment.

In some implementations, the obtaining module is specifically configured to: send a first moment query instruction to the second device; and receive at least one first moment sent by the second device.

In some implementations, the obtaining module is specifically configured to: send a first moment query instruction to the second device; receive device identification information sent by the second device; and obtain at least one preset first moment based on the device identification information.

According to a sixth aspect, an embodiment of this application provides a distance measurement apparatus, used in a second device, and including: an obtaining module, configured to obtain a first moment at which a distance measurement signal is sent; and a sending module, configured to send the first moment to a first device. The sending module is further configured to send the distance measurement signal at the first moment based on a system clock of the second device.

In some implementations, the apparatus further includes a receiving module, configured to: receive at least one synchronization instruction from the first device, and record, based on the system clock of the second device, an eleventh moment at which each synchronization instruction is received; and send a synchronization feedback identifier to the first device in response to each synchronization instruction, where the synchronization feedback identifier includes the eleventh moment and a twelfth moment at which the synchronization feedback identifier is sent, and the twelfth moment is recorded based on the system clock of the second device.

In some implementations, the obtaining module is specifically configured to: determine that synchronization with the first device is completed; and use, as the first moment, a moment at which preset duration elapses after it is determined that the synchronization is completed.

In some implementations, the obtaining module is specifically configured to: receive a distance measurement signal sending instruction, and obtain at least one first moment included in the distance measurement signal sending instruction; or obtain at least one preset first moment based on device identification information of the second device.

In some implementations, the sending module is further configured to send the first moment to the first device after the first moment is obtained. Alternatively, the apparatus further includes a responding module, configured to send the at least one first moment to the first device in response to a first moment query instruction from the first device.

In some implementations, the responding module is further configured to send the device identification information of the second device to the first device in response to the first moment query instruction from the first device.

According to a seventh aspect, an embodiment of this application provides an electronic device, including a memory, a processor, a distance measurement signal receiving component, and a computer program that is stored in the memory and that can be run on the processor. When the processor executes the computer program, the method provided in the first aspect or the method provided in the fourth aspect is implemented.

According to an eighth aspect, an embodiment of this application provides an electronic device, including a memory, a processor, a distance measurement signal transmitting component, and a computer program that is stored in the memory and that can be run on the processor. When the processor executes the computer program, the method provided in the second aspect is implemented.

According to a ninth aspect, an embodiment of this application provides a computer-readable storage medium, where the computer-readable storage medium stores a computer program. When the computer program is executed by a processor, the method provided in the first aspect or the method provided in the fourth aspect is implemented.

According to a tenth aspect, an embodiment of this application provides a computer-readable storage medium, where the computer-readable storage medium stores a computer program. When the computer program is executed by a processor, the method provided in the second aspect is implemented.

According to an eleventh aspect, an embodiment of this application provides a computer program product. When the computer program product runs on a first device, a terminal device is enabled to perform the method provided in the first aspect or the method provided in the fourth aspect.

According to a twelfth aspect, an embodiment of this application provides a computer program product. When the computer program product runs on a second device, a terminal device is enabled to perform the method provided in the second aspect.

According to a thirteenth aspect, an embodiment of this application provides a chip system, where the chip system includes a memory and a processor, and the processor executes a computer program stored in the memory, to implement the method provided in the first aspect or the method provided in the fourth aspect.

According to a fourteenth aspect, an embodiment of this application provides a chip system, where the chip system includes a memory and a processor, and the processor executes a computer program stored in the memory, to implement the method provided in the second aspect.

According to a fifteenth aspect, an embodiment of this application provides a chip system, where the chip system includes a processor, the processor is coupled to the computer-readable storage medium provided in the eighth aspect, and the processor executes a computer program stored in the computer-readable storage medium, to implement the method provided in the first aspect or the method provided in the fourth aspect.

According to a sixteenth aspect, an embodiment of this application provides a chip system, where the chip system includes a processor, the processor is coupled to the computer-readable storage medium provided in the ninth aspect, and the processor executes a computer program stored in the computer-readable storage medium, to implement the method provided in the second aspect.

It may be understood that, for beneficial effects of the second aspect to the sixteenth aspect, refer to related descriptions in the first aspect. Details are not described herein again.

## BRIEF DESCRIPTION OF DRAWINGS

FIG. 1 is a diagram of an application scenario of a distance measurement method according to an embodiment of this application;

FIG. 2 is a diagram of a structure of a first device in a distance measurement method according to an embodiment of this application;

FIG. 3A and FIG. 3B are a diagram of a software structure of a first device in a distance measurement method according to an embodiment of this application;

FIG. 4 is a schematic flowchart of a distance measurement method according to an embodiment of this application;

FIG. 5A is a diagram of a system structure of a first device in a distance measurement method according to an embodiment of this application;

FIG. 5B is a diagram of a system structure of a first device in another distance measurement method according to an embodiment of this application;

FIG. 6 is a schematic flowchart of obtaining $T_2$ in a distance measurement method according to an embodiment of this application;

FIG. 7 is another schematic flowchart of obtaining $T_2$ in a distance measurement method according to an embodiment of this application;

FIG. 8 is still another schematic flowchart of obtaining $T_2$ in a distance measurement method according to an embodiment of this application;

FIG. 9 is a block diagram of a structure of a distance measurement apparatus used in a first device according to an embodiment of this application;

FIG. 10 is a block diagram of a structure of a distance measurement apparatus used in a second device according to an embodiment of this application;

FIG. 11 is a block diagram of a structure of another distance measurement apparatus used in a first device according to an embodiment of this application;

FIG. 12 is a block diagram of a structure a first device according to an embodiment of this application; and

FIG. 13 is a block diagram of a structure a second device according to an embodiment of this application.

## DESCRIPTION OF EMBODIMENTS

In the following descriptions, for illustration instead of limitation, specific details such as a specific system structure and a technology are provided, to facilitate a thorough understanding of embodiments of this application. However, a person skilled in the art should know that this application may also be implemented in other embodiments without these specific details. In other cases, detailed descriptions of a well-known system, apparatus, circuit, and method are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or collections thereof.

It should also be understood that the term "and/or" used in the specification and the appended claims of this application means any combination and all possible combinations of one or more of associated listed items, and includes these combinations.

As used in the specification and the appended claims of this application, the term "if" may be interpreted as "when" or "once" or "in response to determining" or "in response to detecting" depending on the context.

In addition, in the descriptions of the specification and the appended claims of this application, the terms "first", "second", "third", and the like are merely intended for differentiation and description, but shall not be understood as an indication or an implication of relative importance.

Reference to "an embodiment", "some embodiments", or the like described in the specification of this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and variations thereof all mean "including, but not limited to", unless otherwise specifically emphasized in another manner.

In the conventional technology, during one-way distance measurement, signal strength when a first device is connected to a second device is usually obtained via the first device, and a distance between the first device and the second device is obtained through reverse inference by using a function relationship between the signal strength and the distance. However, because precision of the signal strength is not high, and the signal strength changes due to interference on a signal, precision of a distance measurement result is not high, and an error is large.

In view of this, this application provides a distance measurement method applied to the first device, including: obtaining first offset time and a first moment, where the first offset time is a time difference between a system clock of the first device and a system clock of the second device, the first moment is a moment at which the second device sends a distance measurement signal, and the first moment is obtained based on the system clock of the second device; obtaining a second moment at which the distance measurement signal is received, where the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is interval time between the fourth moment and a moment at which the distance measurement signal receiving chip receives the distance measurement signal; and obtaining the distance between the first device and the second device based on the first offset time, the first moment, and the second moment. In addition, a distance measurement method applied to the second device is provided, including: obtaining a first moment at which a distance measurement signal is sent; and sending the distance measurement signal at the first moment based on a system clock of the second device.

In this application, the first device obtains the first offset time with the system clock of the second device, and synchronizes system time of the first device with system time of the second device. Then, the second moment at which the distance measurement signal sent by the second device is received and the first moment at which the second device sends the distance measurement signal are obtained. Finally, the distance between the first device and the second device may be obtained through calculation based on the first offset time, the first moment, and the second moment. Because precision of the system clock is high, a distance obtained through calculation based on a moment obtained by using the system clock is also more precise, and an error is smaller.

In this application, an example in which distance measurement is performed between the first device and the second device by using an ultrasonic wave is used for description. It should be noted that, in another case, distance measurement may alternatively be implemented between the first device and the second device in a manner of laser distance measurement, infrared distance measurement, or the like. A medium used during distance measurement is not limited in this application.

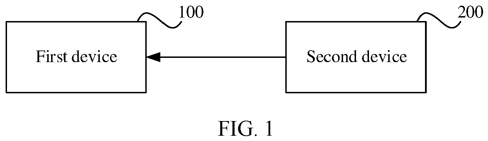

FIG. 1 is a diagram of an application scenario of a distance measurement method according to an embodiment of this application.

Refer to FIG. 1. At least one first device 100 and at least one second device 200 are included. The first device 100 may be a mobile phone, a tablet computer, an augmented reality (augmented reality, AR)/virtual reality (virtual reality, VR) device, a large-screen device, a notebook computer, a netbook, a personal digital assistant (personal digital assistant, PDA), or the like. The first device 100 needs to have a capability of receiving the distance measurement signal. A specific type of the first device 100 is not limited in this embodiment of this application. For ultrasonic wave distance measurement, the first device 100 needs to have a recording device that can receive an ultrasonic wave, for example, include a microphone that can receive the ultrasonic wave and a corresponding audio chip. For example, the audio chip may be a high-fidelity (High-Fidelity, Hi-Fi) chip.

The second device 200 may be a terminal device having a distance measurement signal transmitting function, a first device 100 having the distance measurement signal transmitting function, or the like. For example, the terminal device having the distance measurement signal transmitting function may be an electronic label, a smart key chain including the electronic label, or a Bluetooth headset. For the ultrasonic wave distance measurement, the second device 200 needs to have an apparatus capable of transmitting the ultrasonic wave.

The first device 100 may record an ultrasonic signal by using the audio chip and the microphone. The second device 200 may send the distance measurement signal by using the ultrasonic wave transmitting apparatus. The distance measurement signal may be an ultrasonic wave pulse signal of a specific frequency, a square wave signal, or the like.

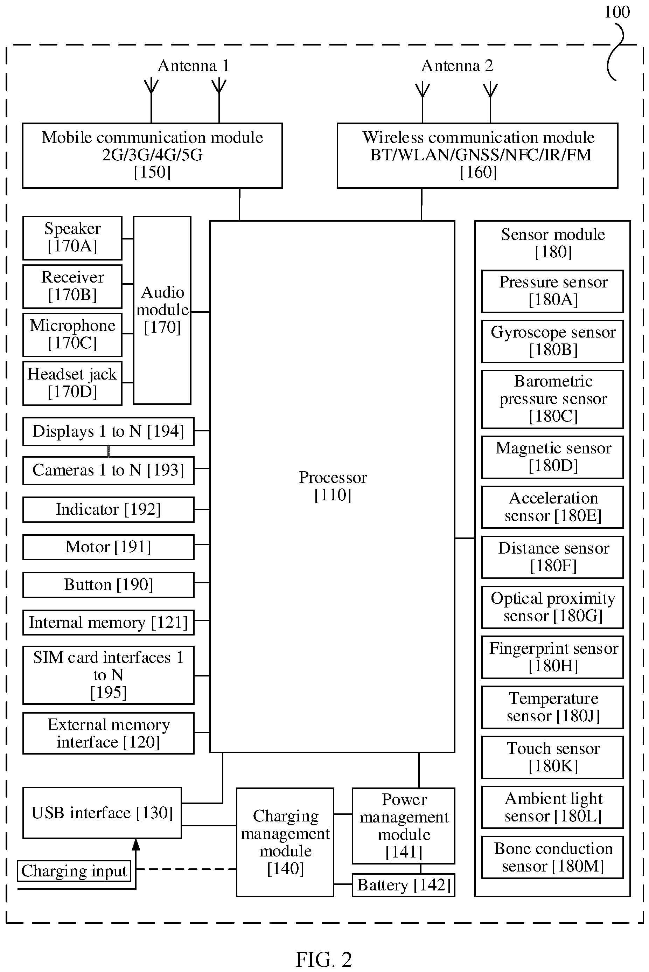

FIG. 2 is a diagram of a structure of a first device in a distance measurement method according to an embodiment of this application.

In FIG. 2, a first device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the first device 100. In some other embodiments of this application, the first device 100 may include more or fewer components than those shown in the figure, or combine some components, or split some components, or have different component arrangements. The components shown in the figure may be implemented by hardware, software, or a combination of software and hardware.

For example, when the first device 100 is a mobile phone, a tablet computer, or a large-screen device, the first device 100 may include all components shown in the figure, or may include only some components shown in the figure.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. The different processing units may be independent components, or may be integrated into one or more processors.

The controller may be a nerve center and a command center of the first device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, the instructions or the data may be directly invoked from the memory. Repeated access is avoided, and waiting time of the processor 110 is reduced, so that efficiency of a system is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the first device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface.

The PCM interface may also be configured to: perform audio communication, and sample, quantize, and encode an analog signal. In some embodiments, the audio module 170 may be coupled to the wireless communication module 160 through a PCM bus interface.

In some embodiments, the audio module 170 may alternatively transfer an audio signal to the wireless communication module 160 through the PCM interface. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication.

In some embodiments, the UART interface is usually configured to connect the processor 110 to the wireless communication module 160. For example, the processor 110 communicates with a Bluetooth module in the wireless communication module 160 through the UART interface, to implement a Bluetooth function.

In some embodiments, the audio module 170 may transfer an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first device 100. The processor 110 communicates with the display 194 through the DSI interface, to implement a display function of the first device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that complies with a USB standard specification, and may be specifically a mini USB interface, a micro USB interface, a USB Type-C interface, or the like. The USB interface 130 may be configured to be connected to a charger to charge the first device 100, may be configured to transmit data between the first device 100 and a peripheral device, or may be configured to be connected to a headset, to play audio through the headset. The interface may be further configured to be connected to another electronic device such as an AR device.

It may be understood that an interface connection relationship between the modules shown in this embodiment of this application is merely an example for description, and does not constitute a limitation on the structure of the first device 100. In some other embodiments of this application, the first device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130.

In some embodiments of wireless charging, the charging management module 140 may receive a wireless charging input through a wireless charging coil of the first device 100. The charging management module 140 supplies power to the electronic device through the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance).

In some other embodiments, the power management module 141 may alternatively be disposed in the processor 110. In some other embodiments, the power management module 141 and the charging management module 140 may alternatively be disposed in a same device.

A wireless communication function of the first device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the first device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transfer the electromagnetic wave to the modem processor for demodulation. The mobile communication module 150 may further amplify a signal modulated by the modem processor, and convert the signal into an electromagnetic wave for radiation through the antenna 1.

In some embodiments, at least some functional modules of the mobile communication module 150 may be disposed in the processor 110.

In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video by using the display 194.

In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, in the first device 100, the antenna 1 and the mobile communication module 150 are coupled, and the antenna 2 and the wireless communication module 160 are coupled, so that the first device 100 can communicate with a network and another device by using a wireless communication technology.

The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, the FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The first device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. For example, in a teaching video and a user action picture video in this embodiment of this application, the display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

In some embodiments, the first device 100 may include one or N displays 194, where N is a positive integer greater than 1.

The first device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. A focal length of the lens may be used to indicate a framing range of the camera. A smaller focal length of the lens indicates a larger framing range of the lens. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV.

In this application, the first device 100 may include the camera 193 with two or more focal lengths.

The digital signal processor is configured to process a digital signal, and may process another digital signal in addition to the digital image signal. For example, when the first device 100 selects a frequency, the digital signal processor is configured to perform Fourier transform on frequency energy.

The video codec is configured to compress or decompress a digital video. The first device 100 may support one or more video codecs. In this way, the first device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition, for example, image identification, facial identification, speech identification, and text understanding of the first device 100 may be implemented by using the NPU.

In this embodiment of this application, the NPU or another processor may be configured to perform operations such as analysis and processing on an image in a video stored in the first device 100.

The external memory interface 120 may be configured to be connected to an external memory card, for example, a micro SD card, to extend a storage capability of the first device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various function applications of the first device 100 and data processing. The internal memory 121 may include a program storage area and a data storage area. The program storage area may store an operating system and an application required by at least one function (for example, a sound playing function or an image playing function). The data storage area may store data (for example, audio data and a phonebook) created during use of the first device 100.

In addition, the internal memory 121 may include a high-speed random access memory, and may further include a nonvolatile memory, for example, at least one magnetic disk storage device, a flash storage device, or a universal flash storage (universal flash storage, UFS).

The first device 100 may implement an audio function by using the audio module 170, the speaker 170A, the receiver 170B, the microphone 170C, the headset jack 170D, and the application processor.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The first device 100 may listen to music or answer a hands-free call by using the speaker 170A. For example, the speaker may play a comparison analysis result provided in this embodiment of this application.

The receiver 170B, also referred to as an "earpiece", is configured to convert an audio electrical signal into a sound signal. When a call is answered or voice information is received by using the first device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the first device 100. In some other embodiments, two microphones 170C may be disposed in the first device 100, to implement a noise reduction function in addition to collecting a sound signal. When distance measurement is performed by using an ultrasonic wave, a selected microphone 170C needs to be capable of recording an ultrasonic audio signal.

In some other embodiments, three, four, or more microphones 170C may alternatively be disposed in the first device 100, to collect a sound signal, reduce noise, identify a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal.

In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The first device 100 determines pressure intensity based on the change of the capacitance. When a touch operation is performed on the display 194, the first device 100 detects touch operation intensity by using the pressure sensor 180A. The first device 100 may also calculate a touch location based on a detection signal of the pressure sensor 180A.

In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to the first pressure threshold is performed on the Messages application icon, an instruction for creating a new SMS message is executed.

The gyroscope sensor 180B may be configured to determine a moving posture of the first device 100. In some embodiments, angular velocities of the first device 100 around three axes (namely, x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the first device 100 jitters, obtains, through calculation based on the angle, a distance for which a lens module needs to compensate, and allows the lens to cancel a jitter of the first device 100 through reverse motion, to implement image stabilization. The gyroscope sensor 180B may be further used in a navigation scenario and a somatic game scenario.

The barometric pressure sensor 180C is configured to measure barometric pressure. In some embodiments, the first device 100 calculates an altitude based on a barometric pressure value measured by the barometric pressure sensor 180C, to assist in positioning and navigation.

The magnetic sensor 180D includes a Hall sensor. The first device 100 may detect opening and closing of a flip cover by using the magnetic sensor 180D. In some embodiments, when the first device 100 is a flip phone, the first device 100 may detect the opening and closing of the flip cover by using the magnetic sensor 180D. Further, a feature such as automatic unlocking of the flip cover is set based on a detected opening or closing state of the leather case or a detected opening or closing state of the flip cover.

The acceleration sensor 180E may detect values of accelerations of the first device 100 in various directions (usually on three axes). When the first device 100 is still, a magnitude and a direction of gravity may be detected. The acceleration sensor 180E may be further configured to identify a posture of an electronic device, and is used in an application such as switching between a landscape mode and a portrait mode or a pedometer.

The distance sensor 180F is configured to measure a distance. The first device 100 may measure the distance by using an ultrasonic wave, infrared, or laser. In some embodiments, in a photographing scenario, the first device 100 may perform distance measurement by using the distance sensor 180F, to implement quick focusing.

The optical proximity sensor 180G may include, for example, a light-emitting diode (LED) and an optical detector, for example, a photoelectric diode. The light-emitting diode may be an infrared light-emitting diode. The first device 100 emits infrared light by using the light-emitting diode. The first device 100 detects infrared reflected light from a nearby object by using the photoelectric diode. When sufficient reflected light is detected, it may be determined that there is an object near the first device 100. When insufficient reflected light is detected, the first device 100 may determine that there is no object near the first device 100. The first device 100 may detect, by using the optical proximity sensor 180G, that the user holds the first device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The first device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the first device 100 is in a pocket, to avoid an accidental touch.

The fingerprint sensor 180H is configured to collect a fingerprint. The first device 100 may use a feature of the collected fingerprint to implement fingerprint-based unlocking, application lock accessing, fingerprint-based photographing, fingerprint-based call answering, and the like.

The temperature sensor 180J is configured to detect a temperature. In some embodiments, the first device 100 executes a temperature processing policy based on the temperature detected by the temperature sensor 180J. For example, when the temperature reported by the temperature sensor 180J exceeds a threshold, the first device 100 lowers performance of a processor near the temperature sensor 180J, to reduce power consumption and implement thermal protection. In some other embodiments, when the temperature is lower than another threshold, the first device 100 heats the battery 142, to prevent the first device 100 from being shut down abnormally due to a low temperature. In some other embodiments, when the temperature is lower than still another threshold, the first device 100 boosts an output voltage of the battery 142, to avoid abnormal shutdown due to a low temperature.

The touch sensor 180K is also referred to as a "touch panel". The touch sensor 180K may be disposed on the display 194, and the touch sensor 180K and the display 194 constitute a touchscreen. The touch sensor 180K is configured to detect a touch operation performed on or near the touch sensor 180K. The touch sensor may transfer the detected touch operation to the application processor, to determine a type of the touch event. A visual output related to the touch operation may be provided by using the display 194. In some other embodiments, the touch sensor 180K may alternatively be disposed on a surface of the first device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The first device 100 may receive a button input, and generate a button signal input related to a user setting and function control of the first device 100.

The motor 191 may generate a vibration prompt. The motor 191 may be configured to provide an incoming call vibration prompt, or may be configured to provide a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the first device 100. The first device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. Types of the plurality of cards may be the same or may be different. The SIM card interface 195 may also be compatible with different types of SIM cards. The SIM card interface 195 may also be compatible with an external memory card. The first device 100 interacts with a network by using the SIM card, to implement a call function, a data communication function, and the like. In some embodiments, the first device 100 uses an eSIM, namely, an embedded SIM card. The eSIM card may be embedded into the first device 100, and cannot be separated from the first device 100.

It should be noted that a structure of a second device 200 may be similar to that of the first device 100, or may be simplified based on the structure of the first device 100. However, the second device 200 further needs to include a distance measurement signal transmitting module, such as an ultrasonic transmitter, an infrared transmitter, or a laser transmitter.

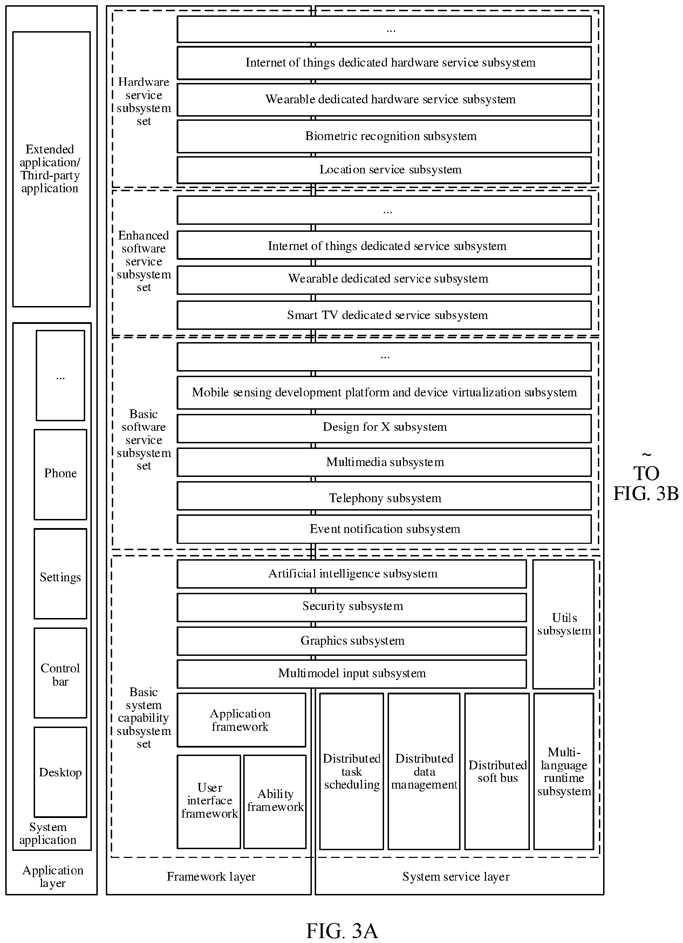

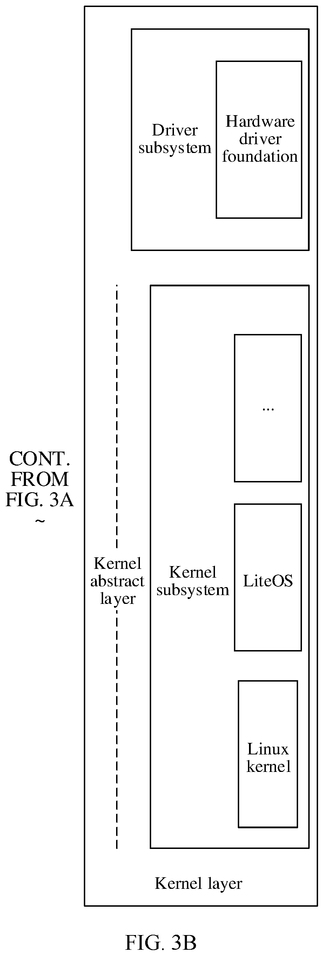

FIG. 3A and FIG. 3B are a diagram of a software structure of a first device in a distance measurement method according to an embodiment of this application.

An operating system of the first device may be an Android (Android) system, a Microsoft windows system (Windows), an Apple mobile operating system (iOS), HarmonyOS (HarmonyOS), or the like. Herein, an example in which the operating system of the first device is HarmonyOS is used for description.

In some embodiments, HarmonyOS may be divided into four layers, including a kernel layer, a system service layer, a framework layer, and an application layer. The layers communicate with each other through a software interface.

As shown in FIG. 3A and FIG. 3B, the kernel layer includes a kernel abstract layer (Kernel Abstract Layer, KAL) and a driver subsystem. The KAL includes a plurality of kernels, for example, a Linux kernel (kernel) of a Linux system and a kernel LiteOS of a lightweight internet of things system. The driver subsystem may include a hardware driver foundation (Hardware Driver Foundation, HDF). The hardware driver foundation can provide a unified peripheral access capability and a driver development and management framework. The multi-kernel (kernel) layer may select a corresponding kernel for processing based on a requirement of the system.

The system service layer is a core capability set of HarmonyOS. The system service layer provides a service for an application by using the framework layer. The system service layer may include the following parts.

A basic system capability subsystem set provides basic capabilities for operations such as running, scheduling, and migration of a distributed application on a plurality of HarmonyOS devices. The basic system capability subsystem set may include subsystems such as a distributed soft bus subsystem, a distributed data management subsystem, a distributed task scheduling subsystem, a multi-language runtime subsystem, a Utils subsystem, a multimodel input subsystem, a graphics subsystem, a security subsystem, an artificial intelligence (Artificial Intelligence, AI) subsystem, and an application framework subsystem. The multi-language runtime subsystem provides a C, C++, or JavaScript (JS) multi-language runtime and a basic system class library, and may further provide a runtime for a Java program (to be specific, a part that is of the application or the framework layer and that is developed by using a Java language) statically compiled by a compiler.

A basic software service subsystem set provides a common and universal software service for HarmonyOS. The basic software service subsystem set may include subsystems such as an event notification subsystem, a telephony subsystem, a multimedia system, a design for X (Design For X, DFX) subsystem, and an MSDP&DV subsystem.

An enhanced software service subsystem set provides differentiated capability-enhanced software services for different devices for HarmonyOS. The enhanced software service subsystem set may include a smart TV dedicated service subsystem, a wearable dedicated service subsystem, and an internet of things (Internet of Things, IoT) dedicated service subsystem.

A hardware service subsystem set provides a hardware service for HarmonyOS. The hardware service subsystem set may include subsystems such as a location service subsystem, a biometric recognition subsystem, a wearable dedicated hardware service subsystem, and an IoT dedicated hardware service subsystem.

The framework layer provides, for HarmonyOS application development, application frameworks and ability (Ability) frameworks in a plurality of languages such as Java, C, C++, and JS, two user interface (User Interface, UI) frameworks (including a Java UI framework applicable to the Java language and a JS UI framework applicable to the JS language), and a multi-language framework application programming interface (Application Programming Interface, API) for various software and hardware services. APIs supported by HarmonyOS device vary based on a degree of system componentization.

The application layer includes a system application and a third-party non-system application. The system application may include applications installed by default on an electronic device, like Desktop, Control bar, Settings, or Phone. An extended application may be an unnecessary application developed and designed by a manufacturer of the electronic device, for example, an application like electronic device manager, device migration, note, or weather. The third-party non-system application may be an application that is developed by another vendor but can be run in HarmonyOS, for example, an application like game, navigation, social networking, or shopping.

An application of HarmonyOS constitutes one or more feature abilities (Feature Abilities, FAs) or particle abilities (Particle Abilities, PAs). The FA has a UI interface and provides a capability of interacting with a user. The PA does not have the UI interface and provides a capability of running tasks in the background and unified data access abstraction. The PA mainly provides support for the FA. For example, the PA functions as a background service to provide a computing capability or functions as a data warehouse to provide a data access capability. An application developed based on the FA or the PA can implement a specific service function, support cross-device scheduling and distribution, and provide consistent and efficient application experience for the user.

Hardware collaboration and resource sharing may be implemented, through a distributed soft bus, distributed device virtualization, distributed data management, and distributed task scheduling, between a plurality of electronic devices that run HarmonyOS.

It should be noted that an operating system of the second device may be the same as or different from that of the first device. Alternatively, the first device and the second device may use a same operating system, but use different kernels. For example, when both the first device and the second device use HarmonyOS, the first device may use the Linux kernel (kernel), and the second device may use the LiteOS kernel.

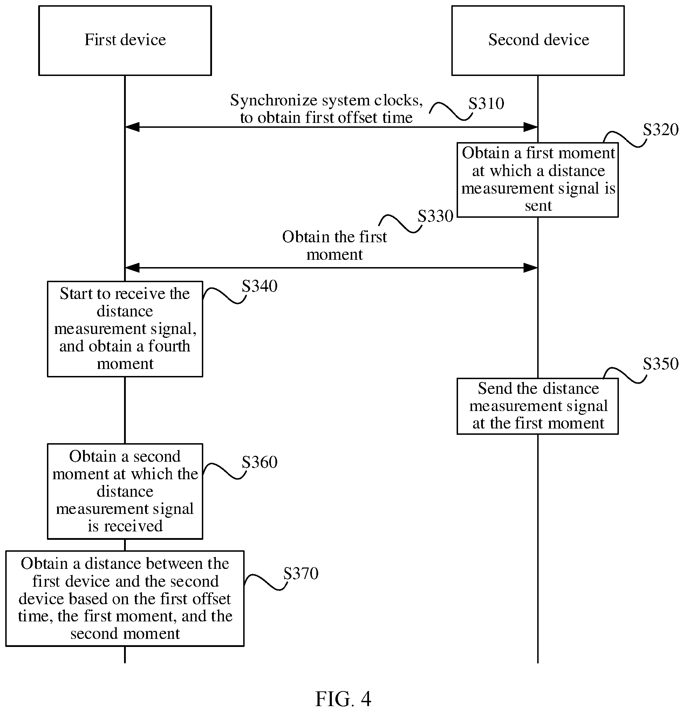

FIG. 4 is a schematic flowchart of a distance measurement method according to an embodiment of this application. By way of example, and not limitation, the method may be applied to the first device 100 and the second device 200.

S310: The first device and the second device synchronize system clocks, to obtain first offset time.

In some implementations, the first device and the second device may synchronize the system clocks by using a same wireless communication module. For example, both the first device and the second device may have a Bluetooth module, a wireless fidelity (Wireless Fidelity, Wi-Fi) module, or the like.

The first device may sequentially send at least one synchronization instruction to the second device by using the wireless communication module, and record, based on the system clock of the first device, a ninth moment at which each synchronization instruction is sent.

Then, a synchronization feedback identifier sent by the wireless communication module of the second device is received, and a tenth moment at which each synchronization feedback identifier is received is recorded based on the system clock of the first device.

The synchronization feedback identifier includes an eleventh moment at which the wireless communication module of the second device receives the synchronization instruction and a twelfth moment at which the wireless communication module of the second device sends the synchronization feedback identifier, and the eleventh moment and the twelfth moment are obtained based on the system clock of the second device. The first offset time is obtained based on the ninth moment, the tenth moment, the eleventh moment, and the twelfth moment.

As an example, it is assumed that the ninth moment is $T_9$, the tenth moment is $T_{10}$, the eleventh moment is $T_{11}$, the twelfth moment is $T_{12}$, the first offset time is $\delta_1$, and bidirectional transmission delays between the first device and the second device are the same and are $T_d$. The following formula may be obtained:

$$T_{10} - T_9 = T_d + \delta_1,$$

and

$$T_{12} - T_{11} = T_d - \delta_1$$

Based on the foregoing formula, the following may be obtained through calculation:

$$\delta_1 = \frac{(T_{10} - T_9) - (T_{12} - T_{11})}{2}$$

It should be noted that the bidirectional transmission delays between the first device and the second device are set to be the same during calculation. However, in actual application, processing duration of different instructions, packets, and the like may be different, and a transmission delay also changes to some extent. Therefore, the first offset time $\delta_1$ may be calculated for a plurality of times, and an average value of a plurality of pieces of first offset time $\delta_1$ is obtained as final first offset time $\delta_1$, to reduce a possible error.

S320: The second device obtains a first moment at which a distance measurement signal is sent.

In some implementations, after determining that synchronization with the first device is completed, the second device may use, as the first moment, a moment at which preset duration elapses after it is determined that the synchronization is completed. Confirming, by the second device, the synchronization with the first device is completed may be receiving a synchronization completion instruction from the first device, or may be sending the synchronization feedback identifier for a preset quantity of times. For example, if the preset duration is 10 ms, refer to S310. After the second device sends the synchronization feedback identifier to the first device for 200 times, it may be determined that the second device determines that the synchronization with the first device is completed. Then, the distance measurement signal is sent to the first device at a moment at which 10 ms elapses after a moment at which the synchronization feedback identifier is sent for a 200th time. That is, the first moment is the moment at which the synchronization feedback identifier is sent for the 200th time plus 10 ms.

In some other implementations, the first moment may be set when the second device is delivered from a factory. For example, when the second device is delivered from the factory, it may be set that the distance measurement signal is sent once every integral minute. In this case, one first moment may be obtained every one minute after the system clock of the second device starts timing. When a factory setting of the second device is obtained, device identification information of the second device may be obtained first, and then the factory setting of the second device is obtained from a server based on the device identification information of the second device.

In some other implementations, the first moment may be set according to an instruction. For example, the second device may receive a distance measurement signal sending instruction, and obtain at least one first moment included in the distance measurement signal sending instruction. The distance measurement signal sending instruction may be sent by the first device by using the wireless communication module. Alternatively, the distance measurement signal sending instruction may be sent by another electronic device that communicates with the second device, for example, may be a distance measurement signal sending instruction forwarded by another second device in a scenario. If the scenario includes a gateway device, and the gateway device is communicatively connected to the second device in a wireless manner, the distance measurement signal sending instruction may alternatively be sent by the gateway device to the second device.

For example, the first device may send the distance measurement signal sending instruction to a Bluetooth module of the second device by using a Bluetooth module. The distance measurement signal sending instruction may instruct the second device to send the distance measurement signal once after 5 seconds. In this case, the first moment is a moment at which the second device receives the distance measurement signal sending instruction plus 5 seconds.

In some other implementations, the distance measurement signal sending instruction may instruct to send the distance measurement signal for a plurality of times. For example, the distance measurement signal sending instruction may instruct to send the distance measurement signal for a first time after 5 seconds, then send the distance measurement signal every 5 seconds, and stop after the distance measurement signal is sent for 10 times. In this case, there are a plurality of first moments, and a difference between two adjacent first moments is 5 seconds.

S330: The first device obtains the first moment.

In some implementations, after determining the first moment, the second device sends the first moment to the first device, and the first device receives the first moment from the second device, that is, obtains the first moment. For example, the second device includes information about the first moment in Bluetooth or wireless network (Wi-Fi) information, and sends the Bluetooth or wireless network information to the first device. Alternatively, for another example, refer to S320. After determining that the synchronization with the first device is completed, the second device may further use, as the first moment, time at which the synchronization is completed plus 10 ms, and send the first moment to the first device, so that the first device obtains the first moment.

In some other implementations, when obtaining the first moment, the first device may first send a first moment query instruction to the second device by using the wireless communication module. Refer to S320. If the first moment of the second device is set when the second device is delivered from the factory, the second device sends the device identification information of the second device to the first device after receiving the first moment query instruction, and the first device obtains the first moment through querying based on the received device identification information of the second device. For example, if data of the factory setting of the second device is stored on the first device, the stored data of the factory setting of the second device may be searched for the corresponding second device based on the received device identification information of the second device, and the factory setting of the corresponding second device is obtained, to further obtain the first moment.

For example, if the first device receives a device model of the second device, and determines, based on the device model of the second device, that the second device sends the distance measurement signal once every integral minute, the first device may obtain, based on the system clock of the first device and the first offset time, a plurality of first moments that are based on the system clock of the second device. For example, the first offset time is 0.1 second, and a current moment of the system clock of the first device is $T'_1$. In this case, $T'_1$ may be corrected to the system clock of the second device based on the first offset time, and then a moment of a next integral minute is determined as the first moment.

In some other implementations, refer to S320. If the first moment of the second device is set based on the instruction, the second device may send at least one first moment to the first device after receiving the first moment query instruction. The first device uses, to calculate a distance, a first moment that is in the plurality of received first moments and that is closest to the current moment.

S340: The first device starts to receive the distance measurement signal, and obtains a fourth moment.

S350: The second device sends the distance measurement signal at the first moment.

S360: The first device obtains a second moment at which the distance measurement signal is received.

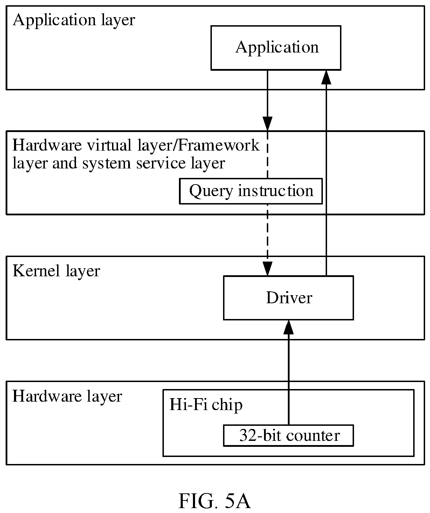

The following separately shows, by using FIG. 5A, FIG. 6, and FIG. 7, and FIG. 5B and FIG. 8, optional methods for obtaining the second moment by the first device in S360.

FIG. 5A is a diagram of a system structure of a first device in a distance measurement method according to an embodiment of this application.

In some implementations, refer to FIG. 5A. The system structure shown in FIG. 5A may be used in an Android system or HarmonyOS that performs distance measurement by using an ultrasonic wave. An application layer, a hardware virtual layer (Android system)/a framework layer and a system service layer (HarmonyOS), a kernel layer, and a hardware layer are included. An application runs at the application layer, and the application may receive a distance measurement instruction from a user, and instruct, in response to a distance measurement instruction, the first device to start distance measurement. The hardware virtual layer/the framework layer and the system service layer transfer an instruction of the application layer to the kernel layer. The kernel layer includes a hardware driver. The kernel layer may control corresponding hardware or obtain a parameter of the hardware by using the hardware driver based on the instruction of the application layer. For example, in this application, the distance measurement is performed by using an ultrasonic wave. A distance measurement signal receiving chip included in the hardware layer may be a Hi-Fi chip, and the Hi-Fi chip includes a 32-bit counter (32K Counter) for timing, namely, a chip clock. The kernel layer may include a driver (Hi-Fi Driver) of the Hi-Fi chip. The Hi-Fi chip may start to receive a distance measurement signal in response to an instruction from an upper layer, and record, by using the 32-bit counter, a fourth moment $T_4$ at which the distance measurement signal starts to be received.

In this embodiment, receiving the distance measurement signal by using the Hi-Fi chip may be implemented by starting recording by the Hi-Fi chip. A moment at which the Hi-Fi chip starts the recording is the moment (the fourth moment $T_4$) at which the Hi-Fi chip starts to receive the distance measurement signal.

Because $T_4$ is obtained based on the chip clock, to obtain a second moment $T_2$ that is based on a system clock, $T_4$ may be corrected to a third moment $T_3$ that is based on system time. Then, the second moment $T_2$ that is based on the system clock may be obtained by adding a receiving time interval to $T_3$.

In some implementations, after starting the recording, the first device performs correlation calculation based on a locally prestored distance measurement signal sequence and a received recording signal, to obtain a correlation value between the distance measurement signal sequence and the received recording signal. Then, a recording signal whose correlation value meets a preset condition is determined. For example, the preset condition may be a maximum value in correlation values of the recording signal, or the preset condition may be a correlation value that is of the recording signal and that is closest to a preset correlation value threshold. A time difference between a moment corresponding to the recording signal that meets the preset condition and the moment at which the recording starts is used as the receiving time interval.

It should be noted that the receiving time interval is a time interval between a moment at which the distance measurement signal starts to be received and a moment at which the distance measurement signal is received. The receiving time interval may be obtained at a chip level (that is, $T_4$ is used as a reference). Alternatively, the time interval may be obtained at a software level (that is, $T_3$ is used as a reference). This is not limited in this application.

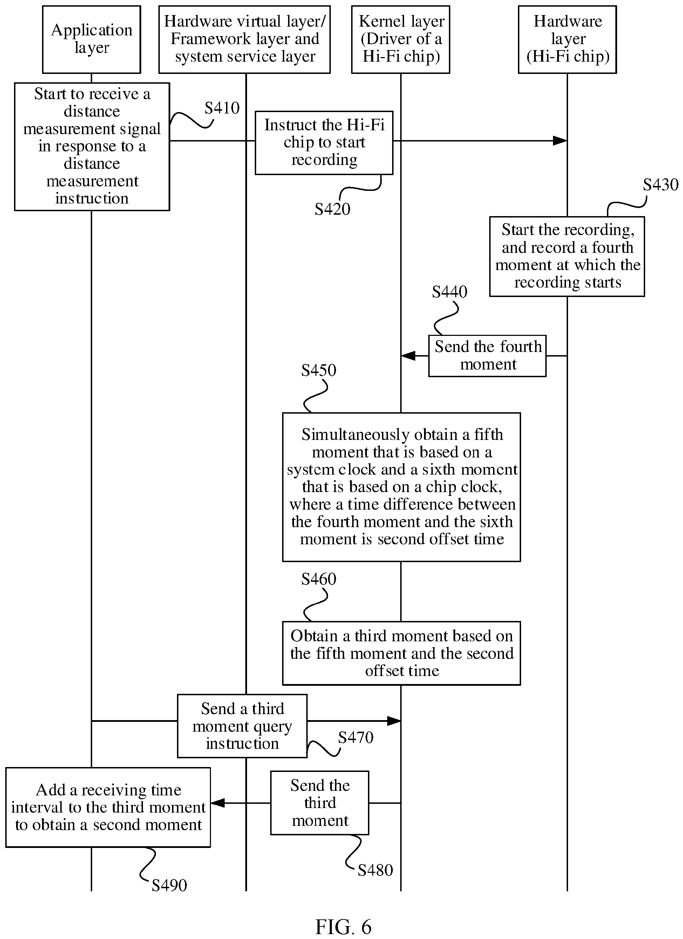

FIG. 6 is a schematic flowchart of obtaining $T_2$ in a distance measurement method according to an embodiment of this application. An implementation process of obtaining $T_2$ in FIG. 6 is implemented based on the system framework of the first device provided in FIG. 5A.

Refer to FIG. 5A and FIG. 6. The procedure includes the following steps.

S410: The application at the application layer receives the distance measurement instruction, and starts to receive the distance measurement signal in response to the distance measurement instruction.

In some implementations, the distance measurement instruction may be an operation performed by the user on the first device. For example, when a distance measurement application is installed in the first device, and a tap operation performed by the user on an area that displays a distance measurement application icon is received, the distance measurement application may be started.

In some examples, after the distance measurement application is started, it may be determined that the distance measurement instruction is received.

Alternatively, in some other examples, after the distance measurement application is started, at least one available second device may be displayed on a screen of the first device. The at least one available second device may be displayed in a form of a text or an icon. When a tap operation performed on an area that displays one of second devices is received, it may be determined that the distance measurement instruction is received.

It should be noted that the first device may alternatively receive the distance measurement instruction in an operation manner such as voice control or a gesture. A manner of receiving the distance measurement instruction is not limited in this application.

S420: The application sends an instruction to the Hi-Fi chip at the hardware layer, to instruct the Hi-Fi chip to start recording.

S430: The Hi-Fi chip starts the recording, and records the fourth moment at which the recording starts.

In some implementations, the chip clock of the Hi-Fi chip is implemented based on the 32-bit counter. When the Hi-Fi chip starts the recording in response to the instruction, the fourth moment may be obtained by reading a value of a register that is in the 32-bit counter. As an example, an address of the register may be "cnf_msg->kemel_stamp = DSP_STAMP".

S440: The Hi-Fi chip sends the fourth moment to the driver of the Hi-Fi chip.

In some implementations, the Hi-Fi chip may actively send the fourth moment to the driver of the Hi-Fi chip after obtaining the fourth moment. Alternatively, the Hi-Fi chip may wait to receive a fourth moment query instruction sent by the driver of the Hi-Fi chip, and send the fourth moment to the driver of the Hi-Fi chip after receiving the fourth moment query instruction.

In some implementations, the Hi-Fi chip may send the fourth moment to the driver of the Hi-Fi chip by using a mailbox (Mailbox) mechanism. The mailbox mechanism is a manner of data transmission and communication between different cores. Data may be exchanged between different processors by using a mailbox register.

In some implementations, when receiving the fourth moment, a driver of the distance measurement signal receiving chip corrects the fourth moment to the third moment that is based on the system clock. Alternatively, a driver of the distance measurement signal receiving chip corrects, in response to a parameter obtaining instruction from the application layer, the fourth moment to the third moment that is based on the system clock.

For example, when receiving the fourth moment, the driver of the Hi-Fi chip may immediately perform S450 to S490, to obtain the third moment. Alternatively, after receiving the fourth moment, the driver of the Hi-Fi chip may wait to respond to the parameter obtaining instruction (for example, a getParameter instruction) from the application layer, and perform S450 to S490 when responding to the parameter obtaining instruction, to obtain the third moment.

S450: The driver of the Hi-Fi chip simultaneously obtains a fifth moment that is based on the system clock and a sixth moment that is based on the chip clock, where a time difference between the fourth moment and the sixth moment is second offset time.

In some implementations, the driver may obtain the fifth moment that is based on the system clock by using a system clock read instruction. For example, a "do_gettimeofday" instruction may be used to obtain the fifth moment. When the driver obtains the sixth moment that is based on the chip clock, refer to the example in S430. The sixth moment is obtained by reading the value of the register that is in the 32-bit counter in the Hi-Fi chip.

In some implementations, the second offset time is $\delta_2$, and indicates duration from starting the recording to obtaining the fifth moment that is based on the system clock and the sixth moment that is based on the chip clock. If the fourth moment is $T_4$ and the sixth moment is $T_6$,

$$\delta_2 = T_6 - T_4(T_6 > T_4),$$

and

$$\delta_2 = (T_6 + 2^{32}) - T_4(T_6 < T_4)$$

When $T_6$ is less than $T_4$, it indicates that the 32-bit counter may overflow. Therefore, calculation is performed after $T_6$ is corrected, and accurate $\delta_2$ can be obtained.

It should be noted that "simultaneously obtaining the fifth moment that is based on the system clock and the sixth moment that is based on the chip clock" refers to obtaining the fifth moment and the sixth moment separately at same absolute time. Due to unavoidable reasons such as a delay and an error of a device, a "simultaneous obtaining" action may fail to be accurately performed as obtaining separately at the same absolute time. When a time difference between respectively obtaining the fifth moment and the sixth moment is less than a preset threshold, it may be considered as "simultaneously obtaining the fifth moment that is based on the system clock and the sixth moment that is based on the chip clock". The preset threshold may be determined based on factors such as performance and precision of components in different first devices.

S460: The driver of the Hi-Fi chip obtains the third moment based on the fifth moment and the second offset time.

In some implementations, if the third moment is $T_3$ and the second offset time is $\delta_2$,

$$T_3 = \frac{T_5 - \delta_2}{32767}.$$

A moment (the third moment) of the system clock at which the recording starts may be obtained by dividing, by 32767, a value obtained by subtracting the second offset time from the fifth moment.

S470: The application at the application layer sends a third moment query instruction to the driver of the Hi-Fi chip by using the hardware virtual layer/the framework layer and the system service layer.

S480: The driver of the Hi-Fi chip sends the third moment to the application at the application layer.

In some implementations, the application at the application layer may send a query instruction, for example, "getParameter ('Nearby _RecordTime')", to an audio hardware abstract layer (Audiohal) at the hardware virtual layer/the framework layer and the system service layer. Then, the Audiohal indicates, in response to the query instruction by using input/output control (Input/Output control, IOCtrl), a driver of a core layer to transfer the third moment to the application at the application layer.

S490: The application at the application layer adds the receiving time interval to the third moment to obtain the second moment.

In some implementations, if the third moment is $T_3$, and the receiving time interval is $\Delta T$, the second moment $T_2$ is:

$$T_2 = T_3 + \Delta T$$

In this embodiment, the fifth moment that is based on the system clock and the sixth moment that is based on the chip clock are simultaneously obtained by using the Hi-Fi driver. Then, the fourth moment that is obtained based on the chip clock and at which the distance measurement signal starts to be received (that is, the recording starts) is corrected to the third moment that is based on the system clock and at which the distance measurement signal starts to be received. In this way, a bottom-layer chip clock is converted into an upper-layer system clock, to further support a function of completing ultrasonic wave distance measurement, so that distance measurement can be more precise, and an error can be smaller.

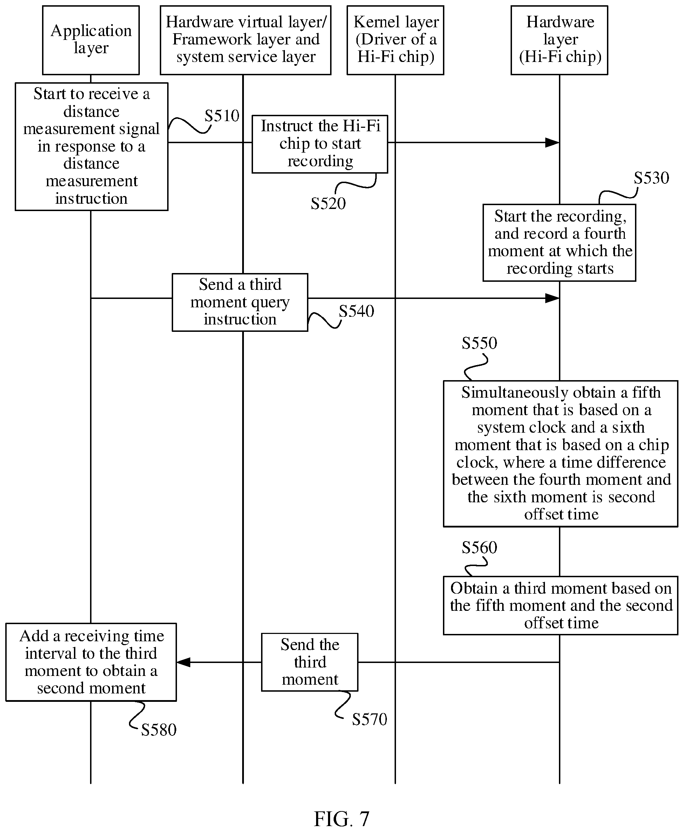

FIG. 7 is another schematic flowchart of obtaining $T_2$ in a distance measurement method according to an embodiment of this application. An implementation process of obtaining $T_2$ in FIG. 7 is implemented based on the system framework of the first device provided in FIG. 5A.

Refer to FIG. 5A and FIG. 7. The procedure includes the following steps.

S510: The application at the application layer receives the distance measurement instruction, and starts to receive the distance measurement signal in response to the distance measurement instruction.

S520: The application sends an instruction to the Hi-Fi chip at the hardware layer, to instruct the Hi-Fi chip to start recording.

S530: The Hi-Fi chip starts the recording, and records the fourth moment at which the recording starts.

In this embodiment, an implementation in S510 to S530 is the same as that in S410 to S430. Details are not described herein again.

S540: The application at the application layer sends a third moment query instruction to the Hi-Fi chip by using the hardware virtual layer/the framework layer and the system service layer.

In some implementations, the application at the application layer may send a query instruction, for example, "getParameter ('Nearby _RecordTime')", to an Audiohal at the hardware virtual layer/the framework layer and the system service layer. Then, after responding to the query instruction, the Audiohal may indicate, by using IOCtrl, the Hi-Fi chip to obtain the third moment and send the third moment to the application at the application layer after the Hi-Fi chip obtains the third moment.

S550: The Hi-Fi chip simultaneously obtains a fifth moment that is based on the system clock and a sixth moment that is based on the chip clock, where a time difference between the fourth moment and the sixth moment is second offset time.

In some implementations, the Hi-Fi chip may obtain the fifth moment that is based on the system clock by using a system clock read instruction. For example, a "do_gettimeofday" instruction may be used to obtain the fifth moment. When the Hi-Fi chip obtains the sixth moment that is based on the chip clock, refer to the example in S430. The sixth moment is obtained by reading the value of the register that is in the 32-bit counter in the Hi-Fi chip.

In some implementations, the second offset time is $\delta_2$, and indicates duration from starting the recording to obtaining the fifth moment that is based on the system clock and the sixth moment that is based on the chip clock. If the fourth moment is $T_4$ and the sixth moment is $T_6$,

$$\delta_2 = T_6 - T_4 (T_6 > T_4),$$

and

$$\delta_2 = (T_6 + 2^{32}) - T_4 (T_6 < T_4)$$

When $T_6$ is less than $T_4$, it indicates that the 32-bit counter may overflow. Therefore, calculation is performed after $T_6$ is corrected, and accurate $\delta_2$ can be obtained.

It should be noted that "simultaneously obtaining the fifth moment that is based on the system clock and the sixth moment that is based on the chip clock" refers to obtaining the fifth moment and the sixth moment separately at same absolute time. Due to unavoidable reasons such as a delay and an error of a device, a "simultaneous obtaining" action may fail to be accurately performed as obtaining separately at the same absolute time. When a time difference between respectively obtaining the fifth moment and the sixth moment is less than a preset threshold, it may be considered as "simultaneously obtaining the fifth moment that is based on the system clock and the sixth moment that is based on the chip clock". The preset threshold may be determined based on factors such as performance and precision of components in different first devices.

S560: The Hi-Fi chip obtains the third moment based on the fifth moment and the second offset time.

In some implementations, if the third moment is $T_3$ and the second offset time is $\delta_2$,

$$T_3 = \frac{T_5 - \delta_2}{32767}$$

A moment (the third moment) of the system clock at which the recording starts may be obtained by dividing, by 32767, a value obtained by subtracting the second offset time from the fifth moment.

S570: The Hi-Fi chip sends the third moment to the application at the application layer.

In some implementations, the Hi-Fi chip may transfer the obtained third moment to the application at the application layer by using the IOCtrl.

S580: The application at the application layer adds the receiving time interval to the third moment to obtain the second moment.

In some implementations, if the third moment is $T_3$, and the receiving time interval is $\varDelta T$, the second moment $T_2$ is:

$$T_2 = T_3 + \Delta T$$

In this embodiment, the fifth moment that is based on the system clock and the sixth moment that is based on the chip clock are simultaneously obtained by using the Hi-Fi chip. Then, the fourth moment that is obtained based on the chip clock and at which the distance measurement signal starts to be received (that is, the recording starts) is corrected to the third moment that is based on the system clock and at which the distance measurement signal starts to be received. In this way, a bottom-layer chip clock is converted into an upper-layer system clock, to further support a function of completing ultrasonic wave distance measurement, so that distance measurement can be more precise, and an error can be smaller.

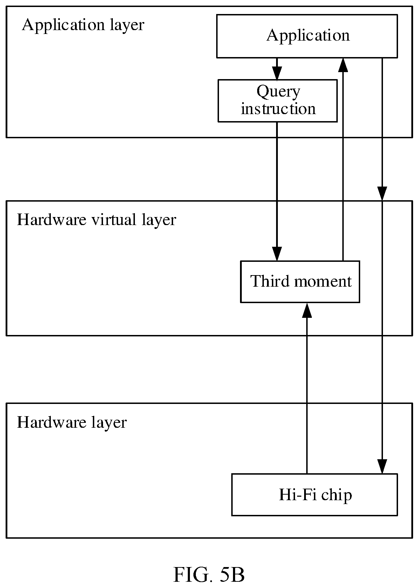

FIG. 5B is a diagram of a system structure of a first device in another distance measurement method according to an embodiment of this application.

In some implementations, refer to FIG. 5B. The system structure shown in FIG. 5B may be used in an Android system, HarmonyOS, or another system that performs distance measurement by using an ultrasonic wave. The system structure includes an application layer, a hardware virtual layer, and a hardware layer. The hardware virtual layer is specifically an interface layer located between an application layer and a hardware layer of an operating system, and aims to abstract hardware. For example, if the foregoing ultrasonic wave distance measurement system is the Android system, the hardware virtual layer is a hardware virtual layer in the Android system; if the foregoing ultrasonic wave distance measurement system is HarmonyOS, the hardware virtual layer is a framework layer and a system service layer; or in another implementation, if the foregoing ultrasonic wave distance measurement system is another system, the hardware virtual layer is a layer for implementing a hardware abstraction function. This is not limited herein. An application runs at the application layer, and the application may receive a distance measurement instruction from a user, and instruct, in response to the distance measurement instruction, the first device to start distance measurement. The hardware virtual layer transfers an instruction of the application layer to the hardware layer. In this implementation, the hardware virtual layer may record, based on data fed back by the hardware layer, a moment at which the data is received, and transfer information about the moment to the application layer when the application layer needs to read the information about the moment.

In some implementations, the foregoing system structure may further include a kernel layer. The kernel layer includes a hardware driver. The kernel layer may control corresponding hardware or obtain a parameter of the hardware by using the hardware driver based on the instruction of the application layer.

In some implementations, if a kernel layer and a hardware layer of a distance measurement signal receiving chip are encapsulated at a same level, that is, a first device on which the distance measurement signal receiving chip is installed cannot invoke the kernel layer of the distance measurement signal receiving chip, when the foregoing ultrasonic wave distance measurement method is implemented, the system framework may not include a kernel layer of a distance measurement signal receiving chip.

For example, in this application, the distance measurement is performed by using the ultrasonic wave, and the distance measurement signal receiving chip included in the hardware layer may be a Hi-Fi chip. In comparison with the embodiment shown in FIG. 5A, a difference lies in that in this embodiment of this application, a third moment is determined by using the hardware virtual layer in the system, and the Hi-Fi chip does not need to be used to obtain a fourth moment $T_4$. Therefore, the Hi-Fi chip may include a counter, or may not include a counter. A structure of the Hi-Fi chip is not limited herein.

In this embodiment, receiving a distance measurement signal by using the Hi-Fi chip may be implemented by starting recording by the Hi-Fi chip. When starting the recording, the Hi-Fi chip may transmit recording data to the hardware virtual layer, and the hardware virtual layer may record a corresponding moment at which the recording data starts to be received, that is, the third moment $T_3$. $T_3$ is obtained by the hardware virtual layer based on a system clock.

In this embodiment, an implementation of a receiving time interval is the same as the implementation in FIG. 5A. For specific descriptions, refer to related descriptions in FIG. 5A. Details are not described herein again.

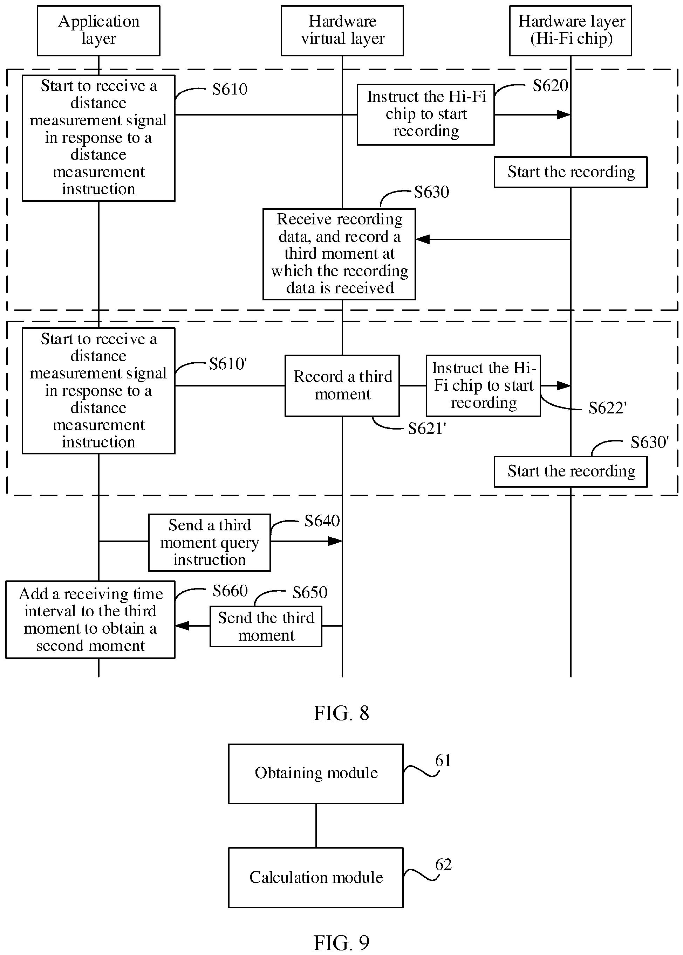

FIG. 8 is still another schematic flowchart of obtaining $T_2$ in a distance measurement method according to an embodiment of this application. An implementation process of obtaining $T_2$ in FIG. 8 is implemented based on the system framework of the first device provided in FIG. 5B.

Refer to FIG. 5B and FIG. 8. The procedure includes the following steps.

S610: The application at the application layer receives the distance measurement instruction, and starts to receive the distance measurement signal in response to the distance measurement instruction.

Because an implementation process of S610 is completely the same as the implementation process of S410, for specific descriptions, refer to related descriptions in S410. Details are not described herein again.

S620: The application sends an instruction to the Hi-Fi chip at the hardware layer, to instruct the Hi-Fi chip to start recording.

S630: The Hi-Fi chip starts the recording, and transmits the recording data to the hardware virtual layer, and the hardware virtual layer records the third moment at which the recording data starts to be received.

In some implementations, the Hi-Fi chip performs the recording in response to the instruction sent by the application, outputs corresponding recording data when the recording starts, transmits the recording data to the hardware virtual layer in the first device by using the hardware driver installed in the first device, and forwards, by using the hardware virtual layer, the recording data to the application located at the application layer.

In some implementations, the hardware virtual layer receives, through a preset interface, the recording data fed back by the hardware driver corresponding to the Hi-Fi chip. When starting to receive the recording data, the hardware virtual layer obtains system time of the first device, and records the system time as the third moment.

In some implementations, after receiving the recording data, the hardware virtual layer may immediately send the recording data to the application located at the application layer. In a process of sending the recording data, the hardware virtual layer may also send the recorded third moment to the application together; or may send the third moment to the application only when receiving a read instruction sent by the application.

Optionally, in another implementation of this application, different from S610 to S630, the hardware virtual layer not only records the third moment when receiving the recording data fed back by the Hi-Fi chip, but may also record the third moment when receiving the instruction sent by the application. A specific implementation process is as follows.

S610': The application at the application layer receives the distance measurement instruction, and starts to receive the distance measurement signal in response to the distance measurement instruction.

S621': The application sends an instruction to the hardware virtual layer, and the hardware virtual layer records the third moment.

In some implementations, when the application located at the application layer needs to send the instruction to the Hi-Fi chip at the hardware layer, the instruction needs to be forwarded by using the hardware virtual layer. In this case, the hardware virtual layer may obtain a value corresponding to the system clock, and use the value as the third moment.

In some implementations, after recording the third moment, the hardware virtual layer immediately sends the third moment to the application at the application layer; or may transfer the third moment to the application at the application layer when waiting for the application to send a read instruction.

S622': A hardware abstraction layer sends an instruction to the Hi-Fi chip at the hardware layer, to instruct the Hi-Fi chip to start recording.

S630': The Hi-Fi chip starts the recording.

In some implementations, the first device may record the third moment in a manner in S610 to S630, may record the third moment in a manner in S610' to S630', or may record the third moment simultaneously in two manners in S610 to S630 and S610' to S630'.

In some implementations, to further improve accuracy of the third moment recorded by the hardware virtual layer, that is, to align the third moment with a moment at which the Hi-Fi chip actually starts the recording, the hardware virtual layer may record, when starting to receive the recording data sent by the Hi-Fi chip, a thirteenth moment corresponding to the system clock, correct the thirteenth moment based on a preset calibration coefficient, to obtain the third moment. The calibration coefficient may be determined based on a delay required for transmission from the Hi-Fi chip to the hardware virtual layer.

S640: The application at the application layer sends a third moment query instruction to the hardware virtual layer.

S650: The hardware virtual layer sends the third moment to the application at the application layer.

In some implementations, the application at the application layer may send a query instruction, for example, "getParameter ('Nearby _RecordTime')", to the hardware virtual layer. Then, the hardware virtual layer transfers, in response to the query instruction, the recorded third moment to the application at the application layer.

S660: The application at the application layer adds the receiving time interval to the third moment to obtain a second moment.

An implementation process of S660 is completely the same as the implementation process of S490. For specific descriptions, refer to the related descriptions in S490. Details are not described herein again.

In this embodiment, when starting to receive the recording data sent by the Hi-Fi chip, the hardware virtual layer records the third moment. Even if a Hi-Fi chip or a driver corresponding to the Hi-Fi chip cannot record the third moment when the first device uses the Hi-Fi chip provided by a third party, the third moment is recorded by using the hardware virtual layer. A function of supporting the ultrasonic wave distance measurement is implemented. This ensures distance measurement precision and reduces an error, and can improve an application scope of the ultrasonic wave distance measurement.

It should be noted that the embodiments shown in FIG. 5A and FIG. 6 show a method for obtaining the second moment in S360, the embodiments shown in FIG. 5A and FIG. 7 show another method for obtaining the second moment in S360, and the embodiments shown in FIG. 5B and FIG. 8 show still another method for obtaining the second moment in S360. S370 is performed after S360.

S370: The first device obtains a distance between the first device and the second device based on the first offset time, the first moment, and the second moment.

In some implementations, time of flight (Time of flight, tof) of the distance measurement signal may be first obtained based on the first offset time, the first moment, and the second moment.

As an example, the first moment $T_1$ may be first corrected, based on the first offset time $\delta_1$, to a seventh moment $T_7$ that is based on the system clock of the first device. Details are as follows:

$$T_7 = T_1 + \delta_1$$

Then, the seventh moment $T_7$ is subtracted from the second moment $T_2$ to obtain the time of flight $T_{tof}$ of the distance measurement signal. Details are as follows:

$$T_{tof} = T_2 - T_7 = T_2 - T_1 - \delta_1$$

In some other examples, the second moment $T_2$ is corrected, based on the first offset time $\delta_1$, to an eighth moment $T_8$ that is based on the system clock of the second device. Details are as follows:

$$T_8 = T_2 - \delta_1$$

Then, the first moment $T_1$ is subtracted from the eighth moment $T_8$ to obtain the time of flight $T_{tof}$ of the distance measurement signal. Details are as follows:

$$T_{tof} = T_8 - T_1 = T_2 - \delta_1 - T_1$$

Finally, the distance D between the first device and the second device is obtained based on a propagation speed V of the distance measurement signal in a medium and the time of flight $T_{tof}$. Details are as follows:

$$D = V * T_{tof}$$

As an example, the ultrasonic wave distance measurement is used in this application, and the propagation speed V is a propagation speed of a sound in air. For example, in an environment with one standard atmospheric pressure and 15°C, V=340 meters/second.

However, the propagation speed of the sound in the air is also affected by atmospheric pressure, air humidity, and a temperature. Therefore, in some implementations, the first device may further obtain atmospheric pressure P, relative humidity RH, and a temperature T of a current scenario. Then, the propagation speed V is calculated based on the atmospheric pressure P, the relative humidity RH, and the temperature T:

$$V = 331.45\sqrt{(1 + T/273.15)(1 + 0.32 * P_w/P)}$$

$$P_w = p * RH$$

A unit of V is meter/second, a unit of the atmospheric pressure P is kilopa (kPa), and a unit of T is degree Celsius. $P_w$ is partial pressure of water vapor in the air, and a unit is kilopa (kPa). $p$ is saturated vapor pressure of water vapor at the temperature T, and a unit is kilopa (kPa).

In some other implementations, if impact of the humidity and the pressure is not considered, and only impact of the temperature is considered, the propagation speed V may be further calculated based on the following formula:

$$V = 331.45\sqrt{1 + T/273.15}$$

The unit of V is meter/second, and the unit of T is degree Celsius.

In some implementations, the first device may obtain the atmospheric pressure P, the relative humidity RH, and the temperature T from a sensor disposed in the current scenario. If no corresponding sensor is disposed in the current scenario, positioning information of the current scenario may be obtained, and the atmospheric pressure P, the relative humidity RH, and the temperature T at a current location are obtained from a server based on the positioning information.

It should be understood that sequence numbers of the steps in the foregoing embodiments do not mean execution sequences. For example, in FIG. 4, S340 is shown to be performed after S310, but S340 may alternatively be performed before S310. An execution sequence of the processes should be determined based on functions and internal logic of the processes, and should not constitute any limitation on implementation processes of embodiments of this application.

Corresponding to the distance measurement method applied to the first device provided in the foregoing embodiment, FIG. 9 is a block diagram of a structure of a distance measurement apparatus used in a first device according to an embodiment of this application. For ease of description, only a part related to this embodiment of this application is shown.

Refer to FIG. 9. The distance measurement apparatus used in the first device includes:

an obtaining module 61, configured to obtain first offset time and a first moment, where the first offset time is a time difference between a system clock of the first device and a system clock of a second device, the first moment is a moment at which the second device sends a distance measurement signal, and the first moment is obtained based on the system clock of the second device; and

the obtaining module 61 is further configured to obtain a second moment at which the distance measurement signal is received, where the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received; and

a calculation module 62, configured to obtain a distance between the first device and the second device based on the first offset time, the first moment, and the second moment.

In some implementations, the obtaining module 61 is specifically configured to: obtain the fourth moment by using the distance measurement signal receiving chip, and send the fourth moment to a driver of the distance measurement signal receiving chip; correct, by using the driver of the distance measurement signal receiving chip, the fourth moment to the third moment that is based on the system clock; and send, by using the driver of the distance measurement signal receiving chip, the third moment to an application layer, and add, at the application layer, the receiving time interval to the third moment to obtain the second moment.

In some implementations, the obtaining module 61 is specifically configured to: when receiving the fourth moment, correct, by using the driver of the distance measurement signal receiving chip, the fourth moment to the third moment that is based on the system clock; or correct, by using the driver of the distance measurement signal receiving chip in response to a parameter obtaining instruction from the application layer, the fourth moment to the third moment that is based on the system clock.

In some implementations, the obtaining module 61 is specifically configured to: obtain the fourth moment by using the distance measurement signal receiving chip; in response to a parameter obtaining instruction, obtain, by using a driver of the distance measurement signal receiving chip, the fourth moment from the distance measurement signal receiving chip, and correct the fourth moment to the third moment that is based on the system clock; and send, by using the driver of the distance measurement signal receiving chip, the third moment to an application layer, and add, at the application layer, the interval time to the third moment to obtain the second moment.

In some implementations, the obtaining module 61 is specifically configured to: simultaneously obtain, by using the driver of the distance measurement signal receiving chip, a fifth moment that is based on the system clock and a sixth moment that is based on the chip clock, where a time difference between the fourth moment and the sixth moment is second offset time; and obtain the third moment based on the fifth moment and the second offset time.

In some implementations, the calculation module 62 is specifically configured to: obtain time of flight of the distance measurement signal based on the first offset time, the first moment, and the second moment; and obtain the distance between the first device and the second device based on a propagation speed of the distance measurement signal in a medium and the time of flight.

In some implementations, the calculation module 62 is specifically configured to: correct, based on the first offset time, the first moment to a seventh moment that is based on the system clock of the first device; and subtract the seventh moment from the second moment, to obtain the time of flight of the distance measurement signal; or correct, based on the first offset time, the second moment to an eighth moment that is based on the system clock of the second device; and subtract the first moment from the eighth moment, to obtain the time of flight of the distance measurement signal.

In some implementations, the obtaining module 61 is specifically configured to: sequentially send at least one synchronization instruction to the second device, and record, based on the system clock of the first device, a ninth moment at which each synchronization instruction is sent; receive a synchronization feedback identifier from the second device, and record, based on the system clock of the first device, a tenth moment at which each synchronization feedback identifier is received, where the synchronization feedback identifier includes an eleventh moment at which the second device receives the synchronization instruction and a twelfth moment at which the second device sends the synchronization feedback identifier, and the eleventh moment and the twelfth moment are obtained based on the system clock of the second device; and obtain the first offset time based on the ninth moment, the tenth moment, the eleventh moment, and the twelfth moment.

In some implementations, the obtaining module 61 is specifically configured to: send a first moment query instruction to the second device; and receive at least one first moment sent by the second device.

In some implementations, the obtaining module 61 is specifically configured to: send the first moment query instruction to the second device; receive device identification information sent by the second device; and obtain the at least one preset first moment based on the device identification information.

Corresponding to the distance measurement method applied to the second device provided in the foregoing embodiment, FIG. 9 is a block diagram of a structure of a distance measurement apparatus used in a second device according to an embodiment of this application. For ease of description, only a part related to this embodiment of this application is shown.

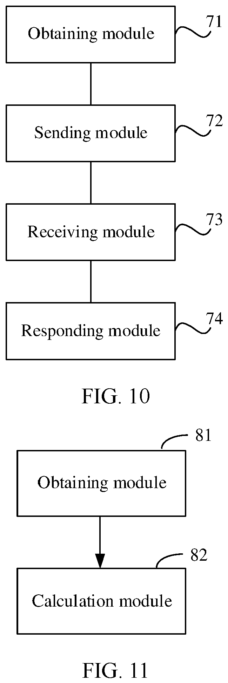

Refer to FIG. 10. A distance measurement apparatus used in the second device includes:

an obtaining module 71, configured to obtain a first moment at which a distance measurement signal is sent; and
a sending module 72, configured to send the first moment to a first device, where
the sending module 72 is further configured to send the distance measurement signal at the first moment based on a system clock of the second device.

In some implementations, the apparatus further includes a receiving module 73, configured to: receive at least one synchronization instruction from the first device, and record, based on the system clock of the second device, an eleventh moment at which each synchronization instruction is received; and send a synchronization feedback identifier to the first device in response to each synchronization instruction, where the synchronization feedback identifier includes the eleventh moment and a twelfth moment at which the synchronization feedback identifier is sent, and the twelfth moment is recorded based on the system clock of the second device.

In some implementations, the obtaining module 71 is specifically configured to: determine that synchronization with the first device is completed; and use, as the first moment, a moment at which preset duration elapses after it is determined that the synchronization is completed.

In some implementations, the obtaining module 71 is specifically configured to: receive a distance measurement signal sending instruction, and obtain at least one first moment included in the distance measurement signal sending instruction; or obtain at least one preset first moment based on device identification information of the second device.

In some implementations, the sending module 72 is further configured to send the first moment to the first device after the first moment is obtained. Alternatively, the apparatus further includes a responding module 74, configured to send the at least one first moment to the first device in response to a first moment query instruction from the first device.

In some implementations, the responding module 74 is further configured to send the device identification information of the second device to the first device in response to the first moment query instruction from the first device.

Refer to FIG. 11. A distance measurement apparatus used in a first device includes:

an obtaining module 81, configured to obtain first offset time and a first moment, where the first offset time is a time difference between a system clock of the first device and a system clock of a second device, the first moment is a moment at which the second device sends a distance measurement signal, and the first moment is obtained based on the system clock of the second device; and
the obtaining module 81 is further configured to obtain a second moment at which the distance measurement signal is received, where the second moment is obtained based on a third moment at which the first device starts to receive the distance measurement signal and a receiving time interval, the third moment is a moment at which a hardware virtual layer of the first device starts to receive the distance measurement signal fed back by a distance measurement signal receiving chip of the first device, and the receiving time interval is a time interval between a moment at which the distance measurement signal starts to be received and a moment at which the distance measurement signal is received; and

a calculation module 82, configured to obtain a distance between the first device and the second device based on the first offset time, the first moment, and the second moment.

In some implementations, the obtaining module 81 is specifically configured to: obtain the third moment by using the hardware virtual layer; and read the third moment from the hardware virtual layer by using an application layer of the first device, and add, at the application layer, the receiving time interval to the third moment to obtain the second moment.

In some implementations, the calculation module 82 is specifically configured to: obtain time of flight of the distance measurement signal based on the first offset time, the first moment, and the second moment; and obtain the distance between the first device and the second device based on a propagation speed of the distance measurement signal in a medium and the time of flight.

In some implementations, the calculation module 82 is specifically configured to: correct, based on the first offset time, the first moment to a seventh moment that is based on the system clock of the first device; and subtract the seventh moment from the second moment, to obtain the time of flight of the distance measurement signal; or correct, based on the first offset time, the second moment to an eighth moment that is based on the system clock of the second device; and subtract the first moment from the eighth moment, to obtain the time of flight of the distance measurement signal.

In some implementations, the obtaining module 81 is specifically configured to: sequentially send at least one synchronization instruction to the second device, and record, based on the system clock of the first device, a ninth moment at which each synchronization instruction is sent; receive a synchronization feedback identifier from the second device, and record, based on the system clock of the first device, a tenth moment at which each synchronization feedback identifier is received, where the synchronization feedback identifier includes an eleventh moment at which the second device receives the synchronization instruction and a twelfth moment at which the second device sends the synchronization feedback identifier, and the eleventh moment and the twelfth moment are obtained based on the system clock of the second device; and obtain the first offset time based on the ninth moment, the tenth moment, the eleventh moment, and the twelfth moment.

It should be noted that content such as information exchange between the foregoing modules and an execution process are based on a same concept as method embodiments of this application. For specific functions and technical effects of the content, refer to the method embodiments. Details are not described herein again.

A person skilled in the art may clearly understand that, for the purpose of convenient and brief description, division into the foregoing functional units and modules is merely used as an example for description. In actual application, the foregoing functions may be allocated to different functional units and modules for implementation based on a requirement. That is, an inner structure of an apparatus is divided into different functional units or modules to implement all or some of the functions described above. The functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units and modules in the foregoing system, refer to a corresponding process in the foregoing method embodiments. Details are not described herein again.

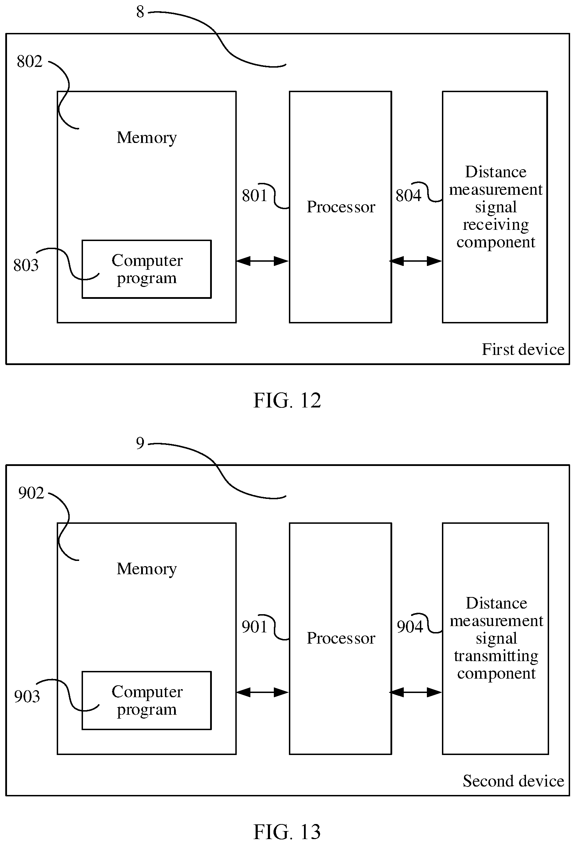

FIG. 12 is a block diagram of a structure a first device according to an embodiment of this application. As shown in FIG. 12, a first device 8 in this embodiment includes:

at least one processor 801 (only one processor is shown in FIG. 12), a memory 802, a distance measurement signal receiving component 804, and a computer program 803 that is stored in the memory 802 and that can be run on the at least one processor 801, where when executing the computer program 803, the processor 801 implements the steps in the foregoing control method embodiments by using the distance measurement signal receiving component 804.

The first device 8 may be a mobile phone, a tablet computer, an augmented reality (augmented reality, AR)/virtual reality (virtual reality, VR) device, a large-screen device, a notebook computer, a netbook, a personal digital assistant (personal digital assistant, PDA), or the like. A person skilled in the art may understand that FIG. 12 is merely an example of the first device 8, and does not constitute a limitation on the first device 8. The first device 8 may include more or fewer components than those shown in the figure, or combine some components, or different components. For example, the first device 8 may further include an input/output device and a network access device.

The processor 801 may be a central processing unit (Central Processing Unit, CPU), or the processor 801 may be another general-purpose processor, a digital signal processor (Digital Signal Processor, DSP), an application-specific integrated circuit (Application-Specific Integrated Circuit, ASIC), a SoC, a field-programmable gate array (Field-Programmable Gate Array, FPGA), or another programmable logic device, a discrete gate or a transistor logic device, a discrete hardware component, or the like. The general-purpose processor may be a microprocessor, or the processor may be any conventional processor or the like.

In some embodiments, the memory 802 may be an internal storage unit of the first device 8, for example, a hard disk or a memory of the first device 8. In some other embodiments, the memory 802 may alternatively be an external storage device of the first device 8, for example, a plug-in hard disk, a smart media card (Smart Media Card, SMC), a secure digital (Secure Digital, SD) card, or a flash card (Flash Card) provided on the first device 8.

Further, the memory 802 may include both the internal storage unit and the external storage device of the first device 8. The memory 802 is configured to: store an operating system, an application, a bootloader (BootLoader), data, another program, and the like, for example, program code of a computer program. The memory 802 may be further configured to temporarily store data that has been output or is to be output.

FIG. 13 is a block diagram of a structure a second device according to an embodiment of this application. As shown in FIG. 13, a second device 9 in this embodiment includes:

at least one processor 901 (only one processor is shown in FIG. 13), a memory 902, a distance measurement signal transmitting component 904, and a computer program 903 that is stored in the memory 902 and that can be run on the at least one processor 901, where when executing the computer program 903, the processor 901 implements the steps in the foregoing control method embodiments by using the distance measurement signal transmitting component 904.

The second device 9 may be a terminal device having a distance measurement signal transmitting function, a first device having the distance measurement signal transmitting function, or the like. For example, the terminal device having the distance measurement signal transmitting function may be an electronic label, a smart key chain including the electronic label, or a Bluetooth headset. A person skilled in the art may understand that FIG. 13 is merely an example of the second device 9, and does not constitute a limitation on the second device 9. The second device 9 may include more or fewer components than those shown in the figure, or combine some components, or different components. For example, the second device 9 may further include an input/output device and a network access device.

The processor 901 may be a central processing unit (Central Processing Unit, CPU), or the processor 901 may be another general-purpose processor, a digital signal processor (Digital Signal Processor, DSP), an application-specific integrated circuit (Application-Specific Integrated Circuit, ASIC), a SoC, a field-programmable gate array (Field-Programmable Gate Array, FPGA), or another programmable logic device, a discrete gate or a transistor logic device, a discrete hardware component, or the like. The general-purpose processor may be a microprocessor, or the processor may be any conventional processor or the like.

In some embodiments, the memory 902 may be an internal storage unit of the second device 9, for example, a hard disk or a memory of the second device 9. In some other embodiments, the memory 902 may alternatively be an external storage device of the second device 9, for example, a plug-in hard disk, a smart media card (Smart Media Card, SMC), a secure digital (Secure Digital, SD) card, or a flash card (Flash Card) provided on the second device 9.

Further, the memory 902 may include both the internal storage unit and the external storage device of the second device 9. The memory 902 is configured to: store an operating system, an application, a bootloader (BootLoader), data, another program, and the like, for example, program code of a computer program. The memory 902 may be further configured to temporarily store data that has been output or is to be output.

An embodiment of this application provides a computer-readable storage medium, where the computer-readable storage medium stores a computer program. When the computer program is executed by a processor, a method applied to a first device is implemented.

An embodiment of this application provides a computer-readable storage medium, where the computer-readable storage medium stores a computer program. When the computer program is executed by a processor, a method applied to the second device is implemented.

An embodiment of this application provides a computer program product. When the computer program product runs on the first device, the terminal device is enabled to perform the foregoing method applied to the first device.

An embodiment of this application provides a computer program product. When the computer program product runs on the second device, the terminal device is enabled to perform the foregoing method applied to the second device.

An embodiment of this application provides a chip system, where the chip system includes a memory and a processor, and the processor executes a computer program stored in the memory, to implement the method applied to the first device.

An embodiment of this application provides a chip system, where the chip system includes a memory and a processor, and the processor executes a computer program stored in the memory, to implement the method applied to the second device.

An embodiment of this application provides a chip system, where the chip system includes a processor, the processor is coupled to the computer-readable storage medium provided in the eighth aspect, and the processor executes a computer program stored in the computer-readable storage medium, to implement the method applied to the first device.

An embodiment of this application provides a chip system, where the chip system includes a processor, the processor is coupled to the computer-readable storage medium provided in the ninth aspect, and the processor executes a computer program stored in the computer-readable storage medium, to implement the method applied to the second device.

When the integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments may be implemented. The computer program includes computer program code, and the computer program code may be in a source code form, an object code form, an executable file, an intermediate form, or the like. The computer-readable medium may include at least any entity or apparatus that can carry the computer program code to the first device or the second device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. In some jurisdictions, the computer-readable medium cannot be an electrical carrier signal or a telecommunication signal according to legislation and patent practices.

In the foregoing embodiments, the descriptions of embodiments have respective focuses. For a part that is not described in detail or recorded in an embodiment, refer to related descriptions in other embodiments.

A person of ordinary skill in the art may be aware that units and algorithm steps in the examples described with reference to embodiments disclosed in this specification may be implemented by electronic hardware or a combination of computer software and electronic hardware. Whether the functions are performed by the hardware or the software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed method, apparatus, and system, and the first device or the second device may be implemented in another manner. For example, the described apparatus embodiment is merely an example. For example, division into the modules or units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, mechanical, or another form.

The units described as separate parts may or may not be physically separate, and parts displayed as units may or may not be physical units, may be located at one location, or may be distributed on a plurality of network units. Some or all of the units may be selected based on an actual requirement to achieve an objective of the solutions of embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A distance measurement method, applied to a first device, and comprising:

   obtaining first offset time and a first moment, wherein the first offset time is a time difference between a system clock of the first device and a system clock of a second device, the first moment is a moment at which the second device sends a distance measurement signal, and the first moment is obtained based on the system clock of the second device;
   obtaining a second moment at which the distance measurement signal is received, wherein the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received; and
   obtaining a distance between the first device and the second device based on the first offset time, the first moment, and the second moment.

2. The method according to claim 1, wherein the obtaining a second moment at which the distance measurement signal is received comprises:

obtaining, by the distance measurement signal receiving chip, the fourth moment and sending the fourth moment to a driver of the distance measurement signal receiving chip;
correcting, by the driver of the distance measurement signal receiving chip, the fourth moment to the third moment that is based on the system clock; and
sending, by the driver of the distance measurement signal receiving chip, the third moment to an application layer, and adding, at the application layer, the receiving time interval to the third moment to obtain the second moment.

3. The method according to claim 2, wherein the correcting, by the driver of the distance measurement signal receiving chip, the fourth moment to the third moment that is based on the system clock comprises:

when receiving the fourth moment, correcting, by the driver of the distance measurement signal receiving chip, the fourth moment to the third moment that is based on the system clock; or
correcting, by the driver of the distance measurement signal receiving chip in response to a parameter obtaining instruction from the application layer, the fourth moment to the third moment that is based on the system clock.

4. The method according to claim 1, wherein the obtaining a second moment at which the distance measurement signal is received comprises:

obtaining, by the distance measurement signal receiving chip, the fourth moment;
in response to a parameter obtaining instruction, obtaining, by a driver of the distance measurement signal receiving chip, the fourth moment from the distance measurement signal receiving chip, and correcting the fourth moment to the third moment that is based on the system clock; and
sending, by the driver of the distance measurement signal receiving chip, the third moment to an application layer, and adding, at the application layer, the receiving time interval to the third moment to obtain the second moment.

5. The method according to any one of claims 2 to 4, wherein the correcting the fourth moment to the third moment that is based on the system clock comprises:

simultaneously obtaining, by using the driver of the distance measurement signal receiving chip, a fifth moment that is based on the system clock and a sixth moment that is based on the chip clock, wherein a time difference between the fourth moment and the sixth moment is second offset time; and
obtaining the third moment based on the fifth moment and the second offset time.

6. The method according to any one of claims 1 to 5, wherein the obtaining a distance between the first device and the second device based on the first offset time, the first moment, and the second moment comprises:

obtaining time of flight of the distance measurement signal based on the first offset time, the first moment, and the second moment; and
obtaining the distance between the first device and the second device based on a propagation speed of the distance measurement signal in a medium and the time of flight.

7. The method according to claim 6, wherein the obtaining time of flight of the distance measurement signal based on the first offset time, the first moment, and the second moment comprises:

correcting, based on the first offset time, the first moment to a seventh moment that is based on the system clock of the first device; and
subtracting the seventh moment from the second moment, to obtain the time of flight of the distance measurement signal; or
correcting, based on the first offset time, the second moment to an eighth moment that is based on the system clock of the second device; and
subtracting the first moment from the eighth moment, to obtain the time of flight of the distance measurement signal.

8. The method according to any one of claims 1 to 7, wherein the obtaining first offset time comprises:

sequentially sending, by the first device, at least one synchronization instruction to the second device, and recording, based on the system clock of the first device, a ninth moment at which each synchronization instruction is sent;

receiving a synchronization feedback identifier from the second device, and recording, based on the system clock of the first device, a tenth moment at which each synchronization feedback identifier is received, wherein the synchronization feedback identifier comprises an eleventh moment at which the second device receives the synchronization instruction and a twelfth moment at which the second device sends the synchronization feedback identifier, and the eleventh moment and the twelfth moment are obtained based on the system clock of the second device; and

obtaining the first offset time based on the ninth moment, the tenth moment, the eleventh moment, and the twelfth moment.

9. The method according to any one of claims 1 to 8, wherein the obtaining a first moment comprises:

sending a first moment query instruction to the second device; and
receiving at least one first moment sent by the second device.

10. The method according to any one of claims 1 to 9, wherein the obtaining a first moment comprises:

sending the first moment query instruction to the second device;
receiving device identification information sent by the second device; and
obtaining the at least one preset first moment based on the device identification information.

11. A distance measurement method, applied to a second device, and comprising:

obtaining a first moment at which a distance measurement signal is sent;
sending the first moment to a first device; and
sending the distance measurement signal to the first device at the first moment based on a system clock of the second device.

12. The method according to claim 11, wherein before the sending the distance measurement signal at the first moment based on a system clock of the second device, the method further comprises:

receiving at least one synchronization instruction from the first device, and recording, based on the system clock of the second device, an eleventh moment at which each synchronization instruction is received; and
sending a synchronization feedback identifier to the first device in response to each synchronization instruction, wherein the synchronization feedback identifier comprises the eleventh moment and a twelfth moment at which the synchronization feedback identifier is sent, and the twelfth moment is recorded based on the system clock of the second device.

13. The method according to claim 12, wherein the obtaining a first moment at which a distance measurement signal is sent comprises:

determining that synchronization with the first device is completed; and
using, as the first moment, a moment at which preset duration elapses after it is determined that the synchronization is completed.

14. The method according to any one of claims 11 to 13, wherein the obtaining a first moment at which a distance measurement signal is sent comprises:

receiving a distance measurement signal sending instruction, and obtaining at least one first moment comprised in the distance measurement signal sending instruction; or
obtaining at least one preset first moment based on device identification information of the second device.

15. The method according to claim 13 or 14, wherein the sending the first moment to a first device comprises:

sending the first moment to the first device after the first moment is obtained; or
sending the at least one first moment to the first device in response to a first moment query instruction from the first device.

16. The method according to claim 14 or 15, wherein the sending the first moment to a first device further comprises: sending the device identification information of the second device to the first device in response to the first moment query instruction from the first device.

17. A distance measurement method, applied to a first device, and comprising:

obtaining first offset time and a first moment, wherein the first offset time is a time difference between a system clock of the first device and a system clock of a second device, the first moment is a moment at which the second device sends a distance measurement signal, and the first moment is obtained based on the system clock of the second device;
obtaining a second moment at which the distance measurement signal is received, wherein the second moment is obtained based on a third moment at which the first device starts to receive the distance measurement signal and a receiving time interval, the third moment is a moment at which a hardware virtual layer of the first device starts to receive the distance measurement signal fed back by a distance measurement signal receiving chip of the first device, and the receiving time interval is a time interval between a moment at which the distance measurement signal starts to be received and a moment at which the distance measurement signal is received; and
obtaining a distance between the first device and the second device based on the first offset time, the first moment, and the second moment.

18. The method according to claim 17, wherein the obtaining a second moment at which the distance measurement signal is received comprises:

obtaining the third moment by using the hardware virtual layer; and
reading the third moment from the hardware virtual layer by using an application layer of the first device, and adding, at the application layer, the receiving time interval to the third moment to obtain the second moment.

19. The method according to claim 17, wherein the obtaining a distance between the first device and the second device based on the first offset time, the first moment, and the second moment comprises:

obtaining time of flight of the distance measurement signal based on the first offset time, the first moment, and the second moment; and
obtaining the distance between the first device and the second device based on a propagation speed of the distance measurement signal in a medium and the time of flight.

20. The method according to claim 19, wherein the obtaining time of flight of the distance measurement signal based on the first offset time, the first moment, and the second moment comprises:

correcting, based on the first offset time, the first moment to a seventh moment that is based on the system clock of the first device; and
subtracting the seventh moment from the second moment, to obtain the time of flight of the distance measurement signal; or
correcting, based on the first offset time, the second moment to an eighth moment that is based on the system clock of the second device; and
subtracting the first moment from the eighth moment, to obtain the time of flight of the distance measurement signal.

21. The method according to any one of claims 17 to 20, wherein the obtaining first offset time comprises:

sequentially sending, by the first device, at least one synchronization instruction to the second device, and recording, based on the system clock of the first device, a ninth moment at which each synchronization instruction is sent;
receiving a synchronization feedback identifier from the second device, and recording, based on the system clock of the first device, a tenth moment at which each synchronization feedback identifier is received, wherein the synchronization feedback identifier comprises an eleventh moment at which the second device receives the synchronization instruction and a twelfth moment at which the second device sends the synchronization feedback identifier, and the eleventh moment and the twelfth moment are obtained based on the system clock of the second device; and

obtaining the first offset time based on the ninth moment, the tenth moment, the eleventh moment, and the twelfth moment.

22. The method according to any one of claims 17 to 20, wherein the obtaining a first moment comprises:

sending a first moment query instruction to the second device; and
receiving at least one first moment sent by the second device.

23. The method according to any one of claims 17 to 20, wherein the obtaining a first moment comprises:

sending a first moment query instruction to the second device;
receiving device identification information sent by the second device; and
obtaining at least one preset first moment based on the device identification information.

24. A distance measurement system, comprising a first device and a second device, wherein

the first device obtains first offset time and a first moment, wherein the first offset time is a time difference between a system clock of the first device and a system clock of the second device, the first moment is a moment at which the second device sends a distance measurement signal, and the first moment is obtained based on the system clock of the second device;
the second device sends the distance measurement signal at the first moment based on the system clock of the second device;
the first device obtains a second moment at which the distance measurement signal is received, wherein the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is a time interval between a moment at which the distance measurement signal starts to be received and a moment at which the distance measurement signal is received; and
the first device obtains a distance between the first device and the second device based on the first offset time, the first moment, and the second moment.

25. A distance measurement apparatus, used in a first device, and comprising:

an obtaining module, configured to obtain first offset time and a first moment, wherein the first offset time is a time difference between a system clock of the first device and a system clock of a second device, the first moment is a moment at which the second device sends a distance measurement signal, and the first moment is obtained based on the system clock of the second device; and
the obtaining module is further configured to obtain a second moment at which the distance measurement signal is received, wherein the second moment is obtained based on a third moment at which the first device starts to receive the distance measurement signal and a receiving time interval, the third moment is obtained through conversion based on a fourth moment at which a distance measurement signal receiving chip starts to receive the distance measurement signal, the system clock of the first device, and a chip clock of the distance measurement signal receiving chip, and the receiving time interval is interval time between the fourth moment and a moment at which the distance measurement signal receiving chip receives the distance measurement signal; and
a calculation module, configured to obtain a distance between the first device and the second device based on the first offset time, the first moment, and the second moment.

26. A distance measurement apparatus, used in a second device, and comprising:

an obtaining module, configured to obtain a first moment at which a distance measurement signal is sent; and
a sending module, configured to send the first moment to a first device, wherein
the sending module is further configured to send the distance measurement signal to the first device at the first moment based on a system clock of the second device.

27. An electronic device, comprising a memory, a processor, a distance measurement signal receiving component, and a computer program that is stored in the memory and that can be run on the processor, wherein when the processor executes the computer program, the electronic device is enabled to implement the method according to any one of claims 1 to 23.

28. A computer-readable storage medium, wherein the computer-readable storage medium stores a computer program, and when the computer program is executed by a processor, the method according to any one of claims 1 to 23 is implemented.

29. A computer program product, wherein when the computer program product runs on an electronic device, the electronic device is enabled to implement the method according to any one of claims 1 to 23.

100

200

| First device | ← | Second device |

FIG. 1

100

Antenna 1                    Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 2

| Extended application/ Third-party application | Hardware service subsystem set | ... |
| | | Internet of things dedicated hardware service subsystem |
| | | Wearable dedicated hardware service subsystem |
| | | Biometric recognition subsystem |
| | | Location service subsystem |

Hardware service subsystem set:
- ...
- Internet of things dedicated hardware service subsystem
- Wearable dedicated hardware service subsystem
- Biometric recognition subsystem
- Location service subsystem

Enhanced software service subsystem set:
- ...
- Internet of things dedicated service subsystem
- Wearable dedicated service subsystem
- Smart TV dedicated service subsystem

Basic software service subsystem set:
- ...
- Mobile sensing development platform and device virtualization subsystem
- Design for X subsystem
- Multimedia subsystem
- Telephony subsystem
- Event notification subsystem

Basic system capability subsystem set:
- Artificial intelligence subsystem
- Security subsystem
- Graphics subsystem
- Multimodel input subsystem
- Application framework
  - User interface framework
  - Ability framework
- Distributed task scheduling
- Distributed data management
- Distributed soft bus
- Multi-language runtime subsystem
- Utils subsystem

Application layer:
- Extended application/ Third-party application
- System application
  - ...
  - Phone
  - Settings
  - Control bar
  - Desktop

Framework layer

System service layer

TO FIG. 3B

FIG. 3A

Driver
subsystem

Hardware
driver
foundation

CONT.
FROM
FIG. 3A
~

Kernel
abstract
layer

Kernel
subsystem

...

LiteOS

Linux
kernel

Kernel layer

FIG. 3B

FIG. 4

| Application layer | | |
| :--- | :--- | :--- |
| | Application | |

| Hardware virtual layer/Framework layer and system service layer | | |
| :--- | :--- | :--- |
| | Query instruction | |

| Kernel layer | | |
| :--- | :--- | :--- |
| | Driver | |

| Hardware layer | | |
| :--- | :--- | :--- |
| | Hi-Fi chip | |
| | 32-bit counter | |

FIG. 5A

FIG. 5B

| Application layer | Hardware virtual layer/ Framework layer and system service layer | Kernel layer (Driver of a Hi-Fi chip) | Hardware layer (Hi-Fi chip) |
|---|---|---|---|

Start to receive a distance measurement signal in response to a distance measurement instruction

S410

Instruct the Hi-Fi chip to start recording

S420

S430

Start the recording, and record a fourth moment at which the recording starts

S440

Send the fourth moment

S450

Simultaneously obtain a fifth moment that is based on a system clock and a sixth moment that is based on a chip clock, where a time difference between the fourth moment and the sixth moment is second offset time

S460

Obtain a third moment based on the fifth moment and the second offset time

Send a third moment query instruction

S470

Send the third moment

Add a receiving time interval to the third moment to obtain a second moment

S490

S480

FIG. 6

| Application layer | Hardware virtual layer/ Framework layer and system service layer | Kernel layer (Driver of a Hi-Fi chip) | Hardware layer (Hi-Fi chip) |
|---|---|---|---|

Start to receive a distance measurement signal in response to a distance measurement instruction

S510

Instruct the Hi-Fi chip to start recording

S520

S530

Start the recording, and record a fourth moment at which the recording starts

Send a third moment query instruction

S540

S550

Simultaneously obtain a fifth moment that is based on a system clock and a sixth moment that is based on a chip clock, where a time difference between the fourth moment and the sixth moment is second offset time

S560

Obtain a third moment based on the fifth moment and the second offset time

Add a receiving time interval to the third moment to obtain a second moment

Send the third moment

S580

S570

FIG. 7

Application layer | Hardware virtual layer | Hardware layer (Hi-Fi chip)

Start to receive a distance measurement signal in response to a distance measurement instruction — S610

Instruct the Hi-Fi chip to start recording — S620

Start the recording

Receive recording data, and record a third moment at which the recording data is received — S630

Start to receive a distance measurement signal in response to a distance measurement instruction — S610'

Record a third moment — S621'

Instruct the Hi-Fi chip to start recording — S622'

Start the recording — S630'

Send a third moment query instruction — S640

Add a receiving time interval to the third moment to obtain a second moment — S660

Send the third moment — S650

FIG. 8

Obtaining module — 61

Calculation module — 62

FIG. 9

Obtaining module — 71

Sending module — 72

Receiving module — 73

Responding module — 74

FIG. 10

Obtaining module — 81

Calculation module — 82

FIG. 11

8

802

Memory

801 Processor 804

Distance measurement signal receiving component

803 Computer program

First device

FIG. 12

9

902

Memory

901 Processor 904

Distance measurement signal transmitting component

903 Computer program

Second device

FIG. 13

## INTERNATIONAL SEARCH REPORT

| International application No. |
|---|
| **PCT/CN2023/077349** |

**A. CLASSIFICATION OF SUBJECT MATTER**

G01S5/02(2010.01)i

According to International Patent Classification (IPC) or to both national classification and IPC

**B. FIELDS SEARCHED**

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNTXT, CNABS, CNKI, ENTXT: 测距, 钟差, 时刻, 时间, 芯片, 硬件, 时间差, 间隔, TOF, time, difference, ranging, clock, distance

**C. DOCUMENTS CONSIDERED TO BE RELEVANT**

| Category* | Citation of document, with indication, where appropriate, of the relevant passages | Relevant to claim No. |
|---|---|---|
| X | CN 113988842 A (SHANGHAI SUNMI TECHNOLOGY CO., LTD.; CITAQ CO., LTD. et al.) 28 January 2022 (2022-01-28) description, paragraphs [0058]-[0064] and [0132]-[0138], and figure 1 | 11-16, 26-29 |
| X | CN 113993077 A (HONOR TERMINAL CO., LTD.) 28 January 2022 (2022-01-28) description, paragraphs [0078]-[0092], and figure 4 | 11-16, 26-29 |
| A | CN 112291710 A (YULONG COMPUTER TELECOMMUNICATION SCIENTIFIC (SHENZHEN) CO., LTD.) 29 January 2021 (2021-01-29) entire document | 1-29 |
| A | JP 2009198374 A (SUMITOMO ELECTRIC INDUSTRIES) 03 September 2009 (2009-09-03) entire document | 1-29 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 May 2023** | **30 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

| International application No. |
|---|
| **PCT/CN2023/077349** |

| Patent document cited in search report | | | Publication date (day/month/year) | Patent family member(s) | Publication date (day/month/year) |
|---|---|---|---|---|---|
| CN | 113988842 | A | 28 January 2022 | None | |
| CN | 113993077 | A | 28 January 2022 | None | |
| CN | 112291710 | A | 29 January 2021 | None | |
| JP | 2009198374 | A | 03 September 2009 | None | |

Form PCT/ISA/210 (patent family annex) (July 2022)

**REFERENCES CITED IN THE DESCRIPTION**

**Patent documents cited in the description**

- CN 2022140420 W

- CN 202210196160